(19) Europäisches Patentamt
European Patent Office
Office européen des brevets

(11) **EP 4 471 923 A1**

(12) **EUROPEAN PATENT APPLICATION**
published in accordance with Art. 153(4) EPC

(43) Date of publication:
**04.12.2024 Bulletin 2024/49**

(21) Application number: **22923526.2**

(22) Date of filing: **14.12.2022**

(51) International Patent Classification (IPC):
***H01M 10/0566*** *(2010.01)*

(52) Cooperative Patent Classification (CPC):
**H01M 10/052; H01M 10/0566; H01M 10/0568; H01M 10/0569;** Y02E 60/10

(86) International application number:
**PCT/CN2022/138887**

(87) International publication number:
**WO 2023/142739 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.01.2022 CN 202210110653**

(71) Applicant: **Westlake University**
**Hangzhou, Zhejiang 310024 (CN)**

(72) Inventors:
- **WANG, Jianhui**
  **Hangzhou, Zhejiang 310024 (CN)**
- **LIU, Lei**
  **Hangzhou, Zhejiang 310024 (CN)**

(74) Representative: **Petraz, Gilberto Luigi et al**
**GLP S.r.l.**
**Viale Europa Unita, 171**
**33100 Udine (IT)**

# (54) LITHIUM BATTERY ELECTROLYTE HAVING LITHIUM BORATE SALT AND TRIFLUOROACETAMIDE COMPOUND

(57) The present invention relates to a lithium battery electrolyte comprising a lithium borate salt and a trifluoroacetamide compound, wherein the lithium borate salt is as represented by formula (I) below, and the trifluoroacetamide compound is represented by formula (II) below. The electrolyte of the present invention has a wide electrochemical stability window of about 5V. Furthermore, the electrolyte also has excellent compatibility with cathode and anode electrodes. In addition, the electrolyte can achieve the oriented deposition growth of lithium metal under the conditions of relatively large current density, inhibit lithium dendrites, improve the Coulombic efficiency of charging and discharging process, and achieve a long cycle life in a high-energy-density lithium metal battery with more than 500 Wh/kg.

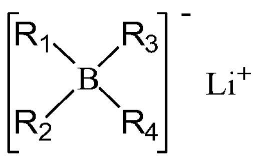
(I)

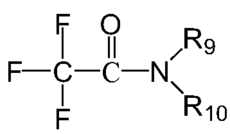
(II)

EP 4 471 923 A1

## Description

## Technical Field

The present invention belongs to the technical field of high-energy-density lithium battery electrolyte, in particular relates to an electrolyte having a lithium borate salt and a trifluoroacetamide compound.

## Background Art

The rapid development of portable electronic devices, smart grids, electric vehicles and other fields are promoted by the widespread application of advanced lithium secondary battery technology, and there is a more urgent need for high-energy-density lithium secondary battery systems. At present, the energy density of lithium-ion batteries with graphite as anode is close to the theoretical limit (< 300 Wh/kg), but it still cannot meet the growing demand for energy density in various emerging fields. The energy density of lithium secondary batteries can be significantly improved by using high specific energy lithium metal (3860 mAh/g) to replace the traditional graphite anode (372 mAh/g). Especially, in anode-free lithium metal batteries (N/P = 0), all lithium sources are provided by the cathode side, by which the highest energy density of the full battery system can be obtained. When matched with the ternary cathode $LiNi_xMn_yCo_zO_2$ (electrode specific capacity > 220 mAh/g under the condition of high nickel x > 0.8 or high voltage > 4.5 V), it has the potential of high energy density of more than 500 Wh/kg under practical conditions. However, as the energy density increases, the cycle life of the battery decreases sharply. This contradiction has become a key challenge limiting the practical application of high energy density lithium secondary batteries.

The main reason for the short cycle life of high energy density batteries is that the battery system needs to match both high specific energy cathode and anode materials, meanwhile, it is required to operate in harsh conditions of high areal capacity (>3 $mAh/cm^2$), lean electrolyte (~2 to 5 g/Ah) and limited lithium resource (N/P<3). However, in conventional carbonate-based electrolytes, a loose, unevenly covered solid electrolyte interphase (SEI) will occur at the highly reactive lithium metal surface, causing uneven lithium deposition and lithium dendrite growth during charge, and "dead lithium" accumulation during discharge, such process accompanied by continuous consumption of electrolyte and active lithium. On the other hand, the further increase of Ni content in the "high-specific capacity" and "high-nickel" cathode is likely to cause Li/Ni mixing, leading to a decrease in reversible capacity. Moreover, the production of highly active $Ni^{4+}$ at the cathode under high voltage conditions will significantly accelerate the side reaction on the interface between the cathode and conventional carbonate-based electrolytes, causing deterioration of the electrolyte-electrode interphase, increase of impedance, and acceleration of the cell performance degradation. Therefore, how to improve its cycle life while maintaining the high energy density is a key issue to be urgently solved in the development of high-energy-density lithium secondary batteries.

So far, a variety of strategies have been reported to inhibit lithium dendrites and slow down the side reactions on the electrode-electrolyte interface, so as to improve the cycle stability of high-energy-density batteries, such as optimizing electrolyte design, constructing artificial interface passivation layers, and modifying solid-state electrolytes. Among them, optimizing electrolyte design is one of the most effective strategies to enhance the battery lifespan. The following are some of the most representative research progresses in high-energy-density lithium metal batteries. The cycle life of a battery is defined as the number of cycles at which the capacity retention is 80%, and the depth of discharge (DoD) is defined as the percentage of discharge capacity of the first cycle to the theoretical capacity of the battery. Yi Cui et al. (Nat. Energy 2020, 5, 526-533) applied a weakly solvating fluorinated electrolyte (1 mol/L LiFSI-FDMB) in a 325 Wh/kg anode-free lithium metal pouch cell (Cu‖NCM811, E/C=2.2 g/Ah), and obtained a battery lifespan of 70 cycles under given test conditions (25°C, 250 kPa, 100% DoD). Ju Li et al. (Nat. Energy 2021, 6, 495-505) applied a sulfonamide-based electrolyte (1 mol/L LiFSI-DMTMSA) in a 353 Wh/kg lithium metal pouch cell (Li‖NMC811, N/P=2.9, E/C=2.3 g/Ah) with 60 μm lithium anode and 4.7 V-upper cut-off voltage NCM811 cathode, and obtained a battery lifespan of 80 cycles under given test conditions (25°C, 200 kPa, 100% DoD). Jun Liu et al. (Nat. Energy 2021, 6, 723-732) reported a localized high-concentration electrolyte (1.5 mol/L LiFSI-1.2DME-3TTE) in a 350 Wh/kg lithium metal pouch cell (Li‖NCM622, N/P=1, E/C = 2.4 g/Ah) constructed by 20 μm ultra-thin lithium anode, and obtained a battery lifespan of 500 cycles under given test conditions (25°C, 172 kPa, 100% DoD); when using a 350 Wh/kg anode-free lithium metal pouch cell (Cu‖NCM622, E/C=2.6 g/Ah), the cycle life is shortened to 100 cycles. J. R. Dahn et al. (Nat. Energy 2020, 5, 693-702) reported a dual-salt high-concentration electrolyte (2 mol/L LiDFOB + 1.4 mol/L $LiBF_4$-FEC-DEC) in a 375 Wh/kg anode-free lithium metal pouch cell (Cu‖NCM523, E/C=2.6 g/Ah), and obtained a battery lifespan of 200 cycles under given test conditions (40°C, 1170 kPa, 80% DoD). Although this work significantly improved the cycling performance of the anode-free battery, the viscosity of this electrolyte is high, and the cycling performance test needs to be carried out under harsh conditions of high temperature and high pressure. Under testing conditions of room temperature and low pressure (20°C, 170 kPa), the battery still suffered from severe capacity decay with the cycle life of only 95 cycles. In summary, the electrolyte strategy has shown positive effects, indicating the potential for commercialization of high-energy-density lithium metal secondary

batteries.

With high specific energy lithium metal anode being stabilized, increasing the cut-off voltage of the NCM cathode increases not only the operating voltage of the battery but also the specific capacity of the cathode material, thus further improving the energy density of the full battery system. For example, when the cut-off potential is increased from 4.3 V to 4.7 V, the specific capacity of NCM523 electrode can be increased from 165 mAh/g to 214 mAh/g, and the energy density can be increased by 31.4%.

Therefore, development of a stable electrolyte suitable for both lithium metal anode and high-voltage cathode is crucial for achieving high energy density and long-life lithium batteries at the 500 Wh/kg level.

## Summary of the invention

It is an object of the present invention to provide a stable electrolyte with a wide potential window to enhance the cycle life of high energy density lithium batteries under practical application conditions. After numerous experiments, the inventors surprisingly found that, when a lithium borate salt is used as the only or main lithium salt together with a trifluoroacetamide compound as the only or main organic solvent and a small amount of an optional functional additive, the prepared electrolyte has a wide electrochemical stability window of about 5 V. In addition, the electrolyte also has excellent compatibility with cathode and anode. Further, the electrolyte can achieve oriented deposition growth of lithium metal under high current density conditions, inhibit lithium dendrites, improve the charge/discharge Coulombic efficiency, and achieve a long cycle life in lithium metal batteries with a high energy density of >500 Wh/kg.

In one aspect, the present invention relates to a lithium battery electrolyte comprising: (1) a lithium borate salt and (2) a trifluoroacetamide compound.

In another aspect, the present invention relates to use of the lithium borate salt and the trifluoroacetamide compound in combination for preparing a lithium battery electrolyte.

In the electrolyte according to the present invention, the molar concentration of the lithium borate salt can be about 0.1 to 5 mol/L; preferably about 0.8 to 2.5 mol/L, for example 1, 1.2, 1.5, 1.75, 2.0, 2.25 mol/L.

In the electrolyte according to the present invention, the molar ratio of the lithium borate salt to the trifluoroacetamide compound can be 1:1 to 1:100, preferably 1:2 to 1:10, more preferably 1:2.5 to 1:8, for example 1:3, 1:3.5, 1:4, 1:4.5, 1:5, 1:5.5, 1 :6, 1:6.5, 1:7, 1:7.5, etc.

The viscosity and conductivity of the electrolyte can be adjusted by adjusting the molar concentration of the lithium borate salt and/or the molar ratio of the lithium borate salt to the trifluoroacetamide compound in the electrolyte.

In the electrolyte according to the present invention, the lithium borate salt is the main or only lithium salt, and the trifluoroacetamide compound is the main or only solvent, and their total mass can account for about 10% to 100%, more preferably about 50% to 100%, for example, about 60%, 65%, 70%, 75 %, 80%, 85%, 90%, 95%, etc. of the total electrolyte, but is not limited thereto.

The lithium borate salt and the trifluoroacetamide compound in the present invention are described in detail below, respectively.

### 1. Lithium borate salt

The lithium borate salt in the present invention may be a lithium borate salt represented by formula (I):

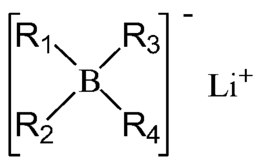

(I)

wherein $R_1$, $R_2$, $R_3$ and $R_4$ are each independently selected from the group consisting of F, -CN,

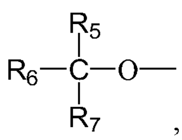

,

and Rs-Ar-O-;

wherein $R_5$, $R_6$ and $R_7$ are each independently selected from the group consisting of H, F, -CN, fluorinated C1-C4 alkyl

(e.g. perfluoro C1-C4 alkyl, $-CH_2F$, $-CHF_2$), and Rs-Ar-, and at least one of $R_5$, $R_6$ and $R_7$ is not hydrogen;
Ar at each occurrence is independently phenyl or naphthyl;
$R_8$ represents 1 to 7 substituents, each of which is independently selected from the group consisting of H, F, -CN, and fluorinated C1-C4 alkyl;
or
one or two pairs of $R_1$, $R_2$, $R_3$ and $R_4$ independently form

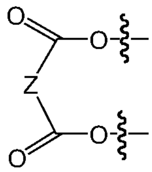

(for example

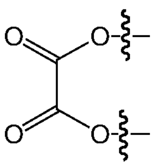, 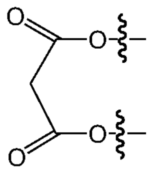, 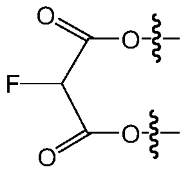), 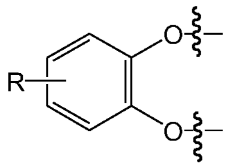, 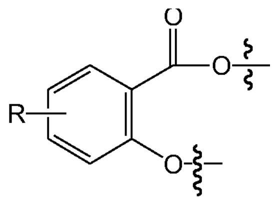

or

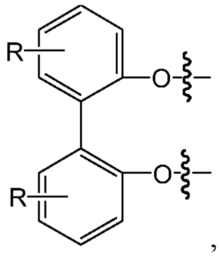,

wherein Z is a direct bond or a C1-C3 alkylene which is unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring.

In some embodiments, one pair of $R_1$, $R_2$, $R_3$ and $R_4$ independently form

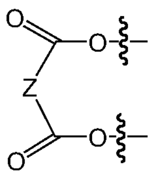

(for example

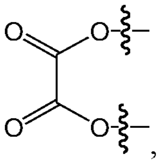, 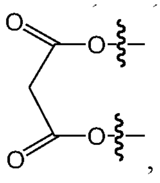, 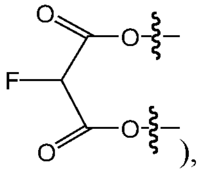), 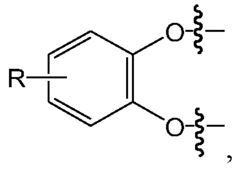,

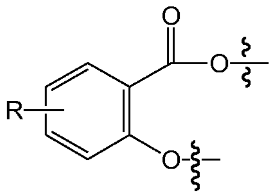 or 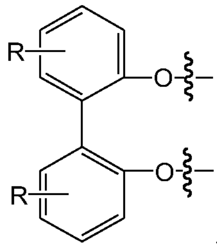 ,

wherein Z is a direct bond or a C1-C3 alkylene which is unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring;

the remaining two groups are each independently selected from the group consisting of F, -CN,

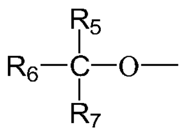

and Rs-Ar-O-; particularly selected from the group consisting of F and -CN; more particularly F;
wherein $R_5$, $R_6$ and $R_7$ are each independently selected from the group consisting of H, F, -CN, fluorinated C1-C4 alkyl (e.g. perfluoro C1-C4 alkyl, $-CH_2F$, $-CHF_2$), and Rs-Ar-, and at least one of $R_5$, $R_6$ and $R_7$ is not hydrogen;
Ar at each occurrence is independently phenyl or naphthyl;
Rs represents 1 to 7 substituents, each of which is independently selected from the group consisting of H, F, -CN, and fluorinated C1-C4 alkyl.

In particular, the lithium borate salt can be selected from the group consisting of lithium difluoro(oxalato)borate (LiDFOB), lithium difluoromalonatoborate (LiDFMB), lithium difluoro-2-fluoromalonatoborate (LiDFFMB), lithium difluoro-2-methyl-2-fluoromalonatoborate (LiDFMFMB), lithium difluoro-2-ethyl-2-fluoromalonatoborate (LiDFEFMB), lithium difluoro-2-propyl-2-fluoromalonatoborate (LiDFPFMB), etc. but is not limited thereto.

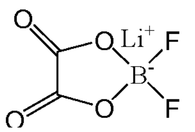
LiDFOB

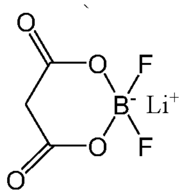
LiDFMB

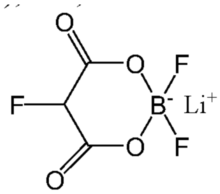
LiDFFMB

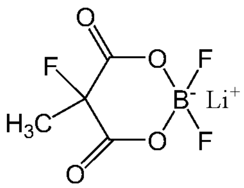
LiDFMFMB

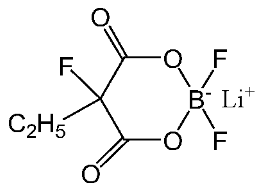
LiDFEFMB

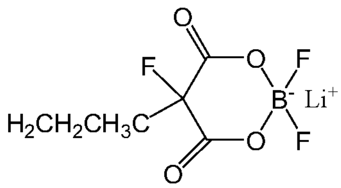
LiDFPFMB

In some embodiments, $R_1$ and $R_2$, $R_3$ and $R_4$ each independently form

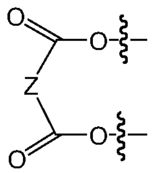

For example

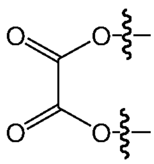 , 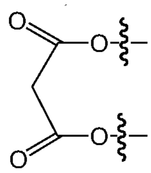 , 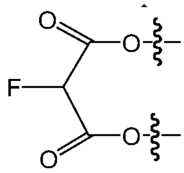 ), 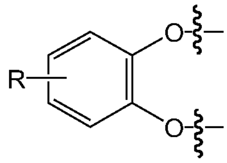 ,

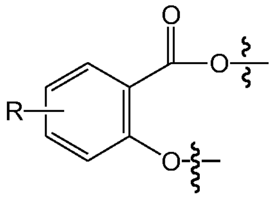 or 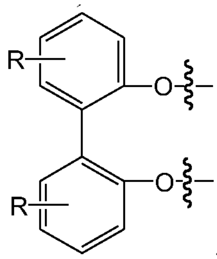 ,

wherein Z is a direct bond or a C1-C3 alkylene which is unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring.

In particular, the lithium borate salt can be selected from the group consisting of lithium bis(oxalato)borate (LiBOB), lithium bis(malonato)borate (LiBMB), lithium bis(2-fluoromalonato)borate (LiBFMB), LiBBB, LiBFBB, LiTBB, LiBNB, LiBSB, LiBBPB, LiBDOB, etc., but is not limited thereto.

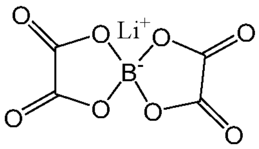
LiBOB

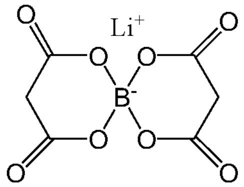
LiBMB

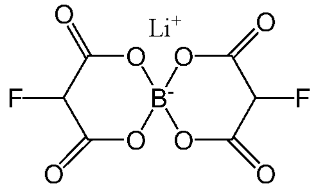
LiBFMB

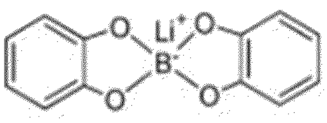
LiBBB

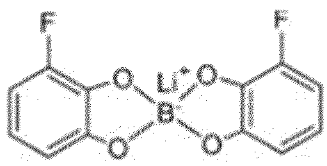
LiBFBB

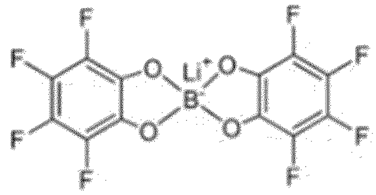
LiBTBB

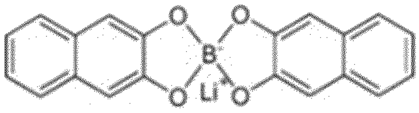

LiBNB

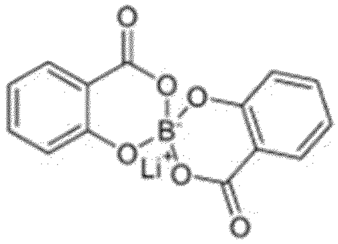

LiBSB

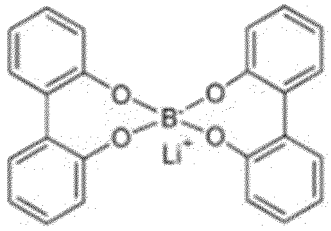

LiBBPB

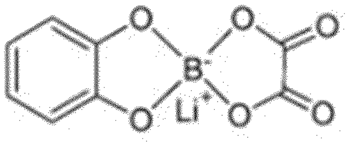

LiBDOB

In some embodiments, $R_1$, $R_2$, $R_3$ and $R_4$ are each independently selected from the group consisting of F, -CN, and

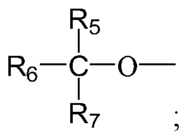

;

wherein $R_5$, $R_6$ and $R_7$ are each independently selected from the group consisting of H, F, -CN, fluorinated C1-C4 alkyl (e.g., perfluoro C1-C4 alkyl, $-CH_2F$, $-CHF_2$), and Rs-Ar-, and at least one of $R_5$, $R_6$ and $R_7$ is not hydrogen,
Ar is phenyl or naphthyl;
$R_8$ represents 1 to 7 substituents, each of which is independently selected from the group consisting of H, F, -CN, and fluorinated C1-C4 alkyl.

In some embodiments, $R_1$, $R_2$, $R_3$ and $R_4$ are each independently selected from the group consisting of F and -CN. In particular, the lithium borate salt may be selected from the group consisting of lithium tetrafluoroborate ($LiBF_4$) and lithium tetracyanoborate ($LiB(CN)_4$).

In some embodiments, $R_1$, $R_2$, $R_3$ and $R_4$ are each independently selected from the group consisting of F and

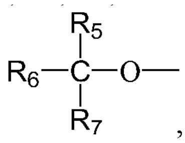

,

and at least one is

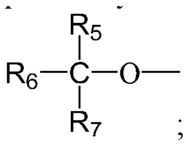

;

wherein $R_5$, $R_6$ and $R_7$ are each independently selected from the group consisting of H, F, -CN, fluorinated C1-C4 alkyl (e.g., perfluoro C1-C4 alkyl, $-CH_2F$, $-CHF_2$), and Rs-Ar-, and at least one of $R_5$, $R_6$ and $R_7$ is not hydrogen,
Ar is phenyl or naphthyl;
$R_8$ represents 1 to 7 substituents, each of which is independently selected from the group consisting of H, F, -CN, and fluorinated C1-C4 alkyl.

In particular, the lithium borate salt may be selected from the group consisting of lithium tetra(fluoroalkoxy)borate, lithium tri(fluoroalkoxy)fluoroborate, lithium di(fluoroalkoxy)bisfluoroborate, lithium fluoroalkoxytrifluoroborate, wherein:

the fluoroalkoxy can be represented by

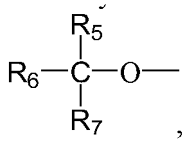

,

wherein $R_5$, $R_6$ and $R_7$ are each independently selected from the group consisting of H, F, -CN, fluorinated C1-C4 alkyl (e.g., perfluoro C1-C4 alkyl, $-CH_2F$, $-CHF_2$), and $R_8$-Ar-, and at least one of $R_5$, $R_6$ and $R_7$ contains fluorine,
Ar is phenyl or naphthyl;
$R_8$ represents 1 to 7 substituents, each of which is independently selected from the group consisting of H, F, -CN, and fluorinated C1-C4 alkyl.

Particularly, the lithium borate salt may be selected from the group consisting of LiBTfe, LiBHFip, lithium perfluoro-tert-butoxytrifluoroborate, lithium hexafluoroisopropoxytrifluoroborate, lithium trifluoroethoxytrifluoroborate, lithium 1, 1-dicyanotrifluoroethoxytrifluoroborate, etc., but is not limited thereto.

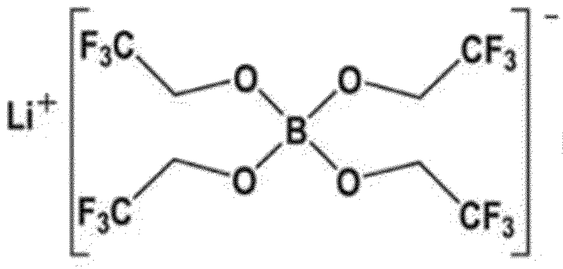

LiBTfe

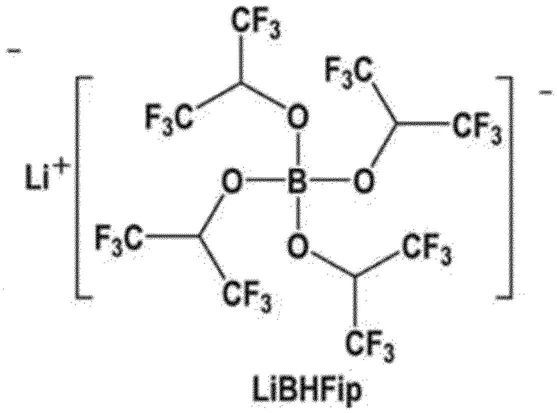

LiBHFip

In some embodiments, the lithium borate salt may be one or more selected from the group consisting of lithium difluoro(oxalato)borate (LiDFOB), lithium bis(oxalato)borate (LiBOB), lithium tetrafluoroborate ($LiBF_4$), lithium tetracyanoborate ($LiB(CN)_4$), lithium tetra(fluoroalkoxy)borate, lithium tri(fluoroalkoxy)fluoroborate, lithium di(fluoroalkoxy)bisfluoroborate, and lithium fluoroalkoxytrifluoroborate; preferably, the lithium borate salt is lithium difluoro(oxalato)borate (LiDFOB).

2. **Trifluoroacetamide compound**

The trifluoroacetamide compound in the present invention may be a trifluoroacetamide compound represented by formula (II):

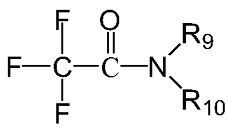

(II)

wherein $R_9$ and $R_{10}$ are each independently H, C1-C3 alkyl, fluorinated C1-C3 alkyl, C1-C3 alkoxy, fluorinated C1-C3 alkoxy, $R_{11}S(=O)_2$-, $R_{12}C(=O)$- or $(CH_3)_3Si$-;
$R_{11}$ and $R_{12}$ are each independently selected from the group consisting of fluorinated C1-C4 alkyl, preferably perfluorinated C1-C4 alkyl.

The trifluoroacetamide compound can be one or more selected from the group consisting of N,N-dimethyltrifluoroacetamide, N-methoxy-N-methyltrifluoroacetamide, N-methyltrifluoroacetamide, N,N-diethyltrifluoroacetamide, N-(trifluoromethanesulfonyl)trifluoroacetamide, N-methyl-N-(trimethylsilyl)trifluoroacetamide, bis(trimethylsilyl)trifluoroacetamide (also known as N,O-bis(trimethylsilyl)trifluoroacetamide), N-methyl-N-(trimethylsilyl)trifluoroacetamide, N-methylbis(trifluoroacetyl)amine, trifluoroacetamide, and bistrifluoroacetamide. Preferably, the trifluoroacetamide compound is N,N-dimethyltrifluoroacetamide.

In the present invention, C1-C4 alkyl refers to a straight or branched alkyl having 1 to 4 carbon atoms, such as $-CH_3$, ethyl, n-propyl, isopropyl, n-butyl, isobutyl, tert-butyl, etc. The meaning of C1-C3 alkyl is deduced accordingly.

In the present invention, fluorinated C1-C4 alkyl refers to a group in which one or more or all hydrogen atoms in the above-defined C1-C4 alkyl are replaced by fluorine atoms, such as $-CH_2F$, $-CHF_2$, $-CF_3$, monofluoroethyl, difluoroethyl, trifluoroethyl, tetrafluoroethyl, pentafluoroethyl, monofluoro-n-propyl, difluoro-n-propyl, trifluoro-n-propyl, tetrafluoro-n-propyl, pentafluoro-n-propyl, hexafluoro-n-propyl, heptafluoro-n-propyl, monofluoroisopropyl, difluoroisopropyl, trifluoroisopropyl, tetrafluoroisopropyl, pentafluoroisopropyl, hexafluoroisopropyl, heptafluoroisopropyl, etc. Perfluoro C1-C4 alkyl refers to a straight or branched alkyl having 1 to 4 carbon atoms in which all hydrogen atoms are replaced by fluorine atoms, such as $-CF_3$, pentafluoroethyl, heptafluoro-n-propyl, heptafluoroisopropyl, nonafluoro-n-butyl, nonafluoroisobutyl, nonafluoro-tert-butyl, etc.

In the present invention, C1-C3 alkoxy refers to RO-, wherein R is the C1-C3 alkyl defined above.

In the present invention, fluorinated phenyl refers to a group in which one or more or all hydrogen atoms of a phenyl group are replaced by fluorine atoms, such as monofluorophenyl, difluorophenyl, trifluorophenyl, tetrafluorophenyl and pentafluorophenyl.

In some embodiments, the electrolyte according to the present invention comprises LiDFOB and N,N-dimethyltrifluoroacetamide. Preferably, the molar ratio of LiDFOB to N,N-dimethyltrifluoroacetamide is 1:2 to 1:10, more preferably 1:2.5 to 1:8. More preferably, the electrolyte is prepared using LiDFOB and N,N-dimethyltrifluoroacetamide in a molar ratio of 1:5. The electrolyte composed of this molar ratio has high conductivity, moderate viscosity, and a wide electrochemical window. By using this electrolyte, the cycle life of 522 Wh/kg (100% DoD) anode-free lithium metal pouch cell (Cu||NCM811) reaches 80 cycles; the cycle life of 365 Wh/kg (70% DoD) anode-free lithium metal pouch cell (Cu||NCM811) reaches 280 cycles; the capacity retention of 417 Wh/kg (100% DoD) lithium metal pouch cell (Li||NCM811, N/P=0.7) is still greater than 86% after 200 cycles; the cycle life of 506 Wh/kg (100% DoD) anode-free lithium metal pouch cell (Cu||NCM955) reaches 65 cycles; and the cycle life of 415 Wh/kg (82% DoD) anode-free lithium metal pouch cell (Cu||NCM955) reaches 140 cycles.

As required, a functional additive for the electrolyte (i.e., an electrolyte additive) may be added to the electrolyte of the present invention. The functional additive may be added and its appropriate dosage may be determined by those skilled in the art according to the required function.

For example, the functional additive may be selected from the group consisting of film-forming additives (for promoting the formation of an excellent or stable SEI film), conductive additives (for improving the conductivity of the electrolyte), overcharge protection additives (for protecting the battery from overcharge and improving the safety of the battery), stability additives (additives for controlling the content of $H_2O$ and HF in the electrolyte), low-temperature additives (for improving the low-temperature performance of the battery), high-temperature additives (for improving the high-temperature performance of the battery), and multifunctional additives (additives that can improve the performances of the electrolyte in many aspects), but is not limited thereto.

For example, the functional additive can be one or more selected from the group consisting of tris(trimethylsilyl) borate (TMSB), tris(trimethylsilyl)phosphate (TMSP), tris(trimethylsilyl)phosphite (TMSPi), hexamethyldisilazane (HMDS), 1,3-propylene sultone (PRS), fluoroethylene carbonate (FEC), difluoroethylene carbonate (DFEC), bis(2,2,2-trifluoroethyl) carbonate (TFEC), fluoroethyl methyl carbonate (FEMC), vinylene carbonate (VC), propylene sulfite (PS), trifluoromethylethylene carbonate (TFPC), ethylene sulfate (DTD), ethylene sulfite (ES), lithium nitrate ($LiNO_3$), lithium hexafluorophosphate ($LiPF_6$), lithium perchlorate ($LiClO_4$), lithium bis(fluorosulfonyl)imide (LiFSI) and lithium bis(trifluoromethanesulfonyl)imide (LiTFSI).

For example, in the electrolyte of the present invention, based on the total amount of the electrolyte, the mass percentage of the functional additive may be 0.1-50%, preferably 0.5-5%, but is not limited thereto.

Furthermore, the electrolyte of the present invention may also be added with a flame retardant or an inert diluent, thereby reducing the flammability or cost of the electrolyte.

The flame retardant or inert diluent may be a flame retardant or inert diluent conventionally used in lithium battery electrolytes in the art. For example, the flame retardant or inert diluent may be any one or more selected from the group consisting of halogenated ethers, halogenated esters, hydrocarbons, halogenated hydrocarbons, aromatic compounds, nitrogen-containing compounds and their derivatives, such as 1,1,2,2-tetrafluoroethyl-2,2,2-trifluoroethyl ether, methyl nonafluorobutyl ether, 1,1,2,2-tetrafluoroethyl-2,2,3,3-tetrafluoropropyl ether, 1H,1H,5H-octafluoropentyl -1,1,2,2-tetrafluoroethyl ether, 1,1,2,3,3,3-hexafluoropropyl methyl ether, 1,1,2,3,3,3-pentafluoropropyl-2,2,2-trifluoroethyl ether, 1,1,2,2-tetrafluoroethyl methyl ether, 1,2-bis(1,1,2,2-tetrafluoroethoxy)ethane, 1,3-bis(1,1,2,2-tetrafluoroethoxy)benzene, 1-(1,1,2,2-tetrafluoroethoxy)propane, 2-methyl-1-(1,1,2,2-tetrafluoroethoxy)propane, 1,3-bis(1,1,2,2-tetrafluoroethoxy)propane, 2,2,3,3-tetrafluoro-1-methoxypropane, trimethyl phosphate, triethyl phosphate, triphenyl phosphate, tributyl phosphate, trifluoroethyl phosphate, hexafluorocyclotriphosphazene, pentafluoroethoxycyclotriphosphazene, trimethoxytrifluorocyclotriphosphazene, m-xylene, isopropylbenzene, mesitylene, chlorobenzene, o-fluorotoluene, m-fluorotoluene, p-fluorotoluene, fluorobenzene, difluorobenzene, trifluorobenzene, tetrafluorobenzene, pentafluorobenzene, hexafluorobenzene, anisole, carbon tetrachloride, cyclohexane, nitroethane, nitropropane, but is not limited thereto. Preferably, the flame retardant solvent or inert diluent is selected from the group consisting of 1,1,2,2-tetrafluoroethyl-2,2,3,3-tetrafluoropropyl ether, methyl nonafluorobutyl ether, m-fluorotoluene.

For example, in the electrolyte of the present invention, based on the total amount of the electrolyte, the mass percentage of the flame retardant solvent or the inert diluent in the electrolyte may be 5-90%, more preferably 20-50%.

In another aspect, the present invention provides use of the electrolyte of the present invention for preparing a lithium battery.

There is no particular limitation on the structure of the battery except that it contains the electrolyte according to the present invention, and it may have any structure suitable for a battery in the art.

Generally speaking, a battery comprises a cathode, an anode, a separator and an electrolyte according to the present invention. As required, the battery may also comprise other structures, such as a chip, a capacitor, a housing, and the like.

There is no particular limitation on the cathode, anode, separator, and other components of the battery, as long as they are suitable for the assembled battery.

In particular, the battery of the present invention is selected from the group consisting of lithium metal battery or anode-free lithium metal battery, lithium ion battery with graphite anode, lithium ion battery with graphite/silicon anode, silicon-carbon anode, porous silicon anode or nano silicon anode, lithium ion battery with lithium titanate anode, lithium battery with graphite/lithium metal composite anode, but is not limited thereto. In some embodiments, the anode of the battery of the present invention is a natural graphite anode.

The cathode of the battery of the present invention can be selected from the group consisting of lithium nickel cobalt manganese oxide cathode (NCM), high voltage lithium-rich manganese oxide cathode (LMR), lithium nickel manganese oxide cathode (LNMO), lithium iron phosphate cathode ($LiFePO_4$), lithium manganese oxide ($LiMn_2O_4$) or lithium cobalt oxide cathode ($LiCoO_2$), but is not limited thereto.

In certain embodiments, the present invention achieves stable charge/discharge cycles of NCM523 at different cut-off voltages, including 2.8-4.3V, 2.8-4.5V, and 2.8-4.7V;

In certain embodiments, the present invention achieves stable charge/discharge cycles of NCM622 at different cut-off voltages, including 2.8-4.3V, 2.8-4.5V, 2.8-4.7V, and 2.8-4.9V;

In certain embodiments, the present invention achieves stable charge/discharge cycles of NCM811 at different cut-off voltages, including 2.8-4.3V, 2.8-4.5V, 2.8-4.6V, 2.8-4.7V, and 2.8-4.8V;

In certain embodiments, the present invention achieves stable charge/discharge cycles of NCM955 at different cut-off voltages, including 2.8-4.3V, 2.8-4.5V, 2.8-4.7V, and 2.8-4.8V;

In certain embodiments, the present invention achieves stable charge/discharge cycles of a high-voltage lithium-rich manganese oxide cathode (LMR) at a voltage of 4.8V;

In certain embodiments, the present invention achieves stable charge/discharge cycles of a high-voltage lithium nickel manganese oxide cathode (LNMO) at a voltage of 4.9V;

In certain embodiments, the present invention achieves stable charge/discharge cycles of a lithium iron phosphate cathode ($LiFePO_4$) at a voltage of 3.8V;

In certain embodiments, the present invention achieves stable charge/discharge cycles of a lithium manganese oxide cathode ($LiMn_2O_4$) at a voltage of 4.3V;

In certain embodiments, the present invention achieves stable charge/discharge cycles of lithium cobalt oxide cathode ($LiCoO_2$) at different cut-off voltages, including 2.8-4.3V, 2.8-4.5V, and 2.8-4.6V,

In certain embodiments, the present invention provides a laboratory-prepared lithium metal pouch cell (Li‖NCM811) with an energy density between 350 and 500 Wh/kg;

In certain embodiments, the present invention provides a laboratory-prepared anode-free lithium metal pouch cell (Cu‖NCM811) with an energy density between 350 and 600 Wh/kg;

In certain embodiments, the present invention provides another laboratory-prepared anode-free lithium metal pouch cell (Cu‖NCM955) with an energy density between 400 and 600 Wh/kg;

In certain embodiments, the electrochemical performance test of the lithium metal pouch cell or anode-free lithium metal pouch cell needs to be carried out under an external pressure of 200 kPa.

Herein, all features or conditions defined in the form of numerical ranges or percentage ranges are only for simplicity and convenience. Accordingly, the description of numerical ranges or percentage ranges should be deemed to have covered and specifically disclosed all possible sub-ranges and individual values within the range, especially integer values. For example, the range description of "1 to 8" should be deemed to have specifically disclosed all sub-ranges such as 1 to 7, 2 to 8, 2 to 6, 3 to 6, 4 to 8, 3 to 8, etc., especially secondary ranges defined by all integer values, and should be

deemed to have specifically disclosed individual values such as 1, 2, 3, 4, 5, 6, 7, 8, etc. within the range. Unless otherwise specified, the above interpretation method applies to all contents of the full text of the present invention, regardless of whether the scope is broad or not.

If the quantity or other numerical value or parameter is expressed as a range, a preferred range or a series of upper and lower limits, it should be understood that all ranges consisting of any upper limit or preferred value of the range and the lower limit or preferred value of the range have been specifically disclosed herein, regardless of whether these ranges are disclosed separately. In addition, if a numerical range is mentioned herein, unless otherwise specified, the range should include its endpoints and all integers and fractions within the range.

Herein, under the premise of achieving the purpose of the invention, numerical values should be understood to have the accuracy of the significant digits of the numerical value. For example, the number 40.0 should be understood to cover the range from 39.50 to 40.49.

The above embodiments are only exemplary embodiments of the present invention and are not intended to limit the present invention. The protection scope of the present invention is defined by the claims. Those skilled in the art may make various modifications or equivalent substitutions to the present invention within the essence and protection scope of the present invention, and such modifications or equivalent substitutions shall also be deemed to fall within the protection scope of the present invention.

## Beneficial Effects

Compared with the prior art, the present invention has the following beneficial effects.

The present invention develops an electrolyte system with a wide electrochemical window by rationally selecting a specific combination of an organic solvent and a solute. The electrolyte can form a dense and stable SEI film rich in lithium fluoride, lithium carbide, nitride, boron oxide, lithium oxide, and boron oxynitride components in the interphases formed on the surface of the cathode and the anode, promote the rapid and uniform transport of lithium-ions through the interphases, realize the oriented-deposition and growth of metallic lithium, and simultaneously inhibit the side reactions of the cathode/anode with the electrolyte, thereby significantly improving the reversibility of the lithium metal anode and the high-voltage and high-specific capacity cathode during the charge/discharge process.

The electrolyte of the present invention has very good compatibility with ternary cathode materials with different nickel contents at various upper limit cut-off voltages, and can significantly improve the long-term cycle stability of high-energy density lithium metal batteries.

The electrolyte of the present invention is compatible with the stable charge/discharge cycles of high-voltage lithium-rich manganese oxide cathode (LMR) and lithium nickel manganese oxide cathode (LNMO).

The electrolyte of the present invention is also compatible with the stable charge and discharge cycles of lithium iron phosphate cathode ($LiFePO_4$), lithium manganese oxide cathode ($LiMn_2O_4$) and lithium cobalt oxide cathode ($LiCoO_2$).

The electrolyte of the present invention can significantly extend the cycle life of high energy density lithium metal or anode-free lithium metal batteries. In practical test conditions, the cycle life of an anode-free lithium metal pouch cell (Cu||NCM811) with an energy density of 522 Wh/kg (100% DoD) reaches 80 cycles; the cycle life of an anode-free lithium metal pouch cell (Cu||NCM811) with an energy density of 365 Wh/kg (70% DoD) reaches 280 cycles; the cycle life of a lithium metal pouch cell (Li||NCM811) with an energy density of 417 Wh/kg (100% DoD) exceeds 200 cycles, and the capacity retention exceeds 86%; the cycle life of an anode-free lithium metal pouch cell (Cu||NCM955) with an energy density of 506 Wh/kg (100% DoD) reaches 65 cycles; the cycle life of an anode-free lithium metal pouch cell (Cu||NCM955) with an energy density of 415 Wh/kg (82% DoD) reaches 140 cycles.

The electrolyte prepared by the present invention in combination with a flame retardant solvent or an inert diluent can reduce the flammability or cost of the electrolyte, thereby improving the safety performance and economic applicability of the battery while ensuring excellent cycle performance of the anode-free lithium metal pouch cell.

The method of the present invention is not limited to lithium metal batteries. The electrolyte of the present invention is compatible with lithium ion batteries with graphite anodes, and can form a dense and stable SEI film on the surface of the graphite anode to obtain stable long-term cycling; the electrolyte of the present invention is also compatible with lithium ion batteries with graphite/silicon anodes, silicon-carbon anodes, porous silicon anodes or nano-silicon anodes, lithium ion batteries with lithium titanate anodes, and lithium batteries with graphite/lithium metal composite anodes.

## Brief Description of the Drawings

Fig. 1 shows results of potentiostatic polarization tests of a CR2032 coin cell (Li||Al) assembled in Example 2 of the

present invention at different potentials (4.0 V, 4.2 V, 4.4 V, 4.6 V, 4.8 V, 5.0 V, 5.2 V, 5.4 V, 5.6 V, 5.8 V, 6.0 V).

Fig. 2 shows charge/discharge curves of a CR2032 lithium metal coin cell (Li||NCM523) assembled in Example 3 of the present invention at room temperature, with a charge/discharge rate of C/3 and upper cut-off voltages of 4.3 V, 4.5 V, and 4.7 V respectively.

Fig. 3 shows charge/discharge curves of a CR2032 lithium metal coin cell (Li||NCM622) assembled in Example 4 of the present invention at room temperature, with a charge/discharge rate of C/3 and upper cut-off voltages of 4.3 V, 4.5 V, 4.7 V, and 4.9 V, respectively.

Fig. 4 shows charge/discharge curves of a CR2032 lithium metal coin cell (Li||NCM811) assembled in Example 5 of the present invention at room temperature, with a charge/discharge rate of C/3 and upper cut-off voltages of 4.3 V, 4.5 V, 4.6 V, 4.7 V, and 4.8 V, respectively.

Fig. 5 shows charge/discharge curves of a CR2032 lithium metal coin cell (Li||NCM955) assembled in Example 6 of the present invention at room temperature, with a charge/discharge rate of C/3 and upper cut-off voltages of 4.3 V, 4.5 V, and 4.7 V, respectively.

Fig. 6 shows charge and discharge curves of a CR2032 lithium metal coin cell (Li||LMR) assembled in Example 7 of the present invention at room temperature with a charge/discharge rate of C/3 and a voltage window of 2-4.8 V

Fig. 7 shows charge/discharge curves of a CR2032 lithium metal coin cell (Li||LNMO) assembled in Example 8 of the present invention at room temperature with a charge/discharge rate of 1C and a voltage window of 3-4.9 V

Fig. 8 shows charge/discharge curves of a CR2032 lithium metal coin cell (Li||$LiFePO_4$) assembled in Example 9 of the present invention at room temperature with a charge/discharge rate of 0.5C and a voltage window of 3-3.8 V

Fig. 9 shows charge and discharge curves of a CR2032 lithium metal coin cell (Li||$LiMn_2O_4$) assembled in Example 10 of the present invention at room temperature with a charge/discharge rate of 0.5C and a voltage window of 3-4.3 V

Fig. 10 shows charge/discharge curves of a CR2032 lithium metal coin cell (Li||$LiCoO_2$) assembled in Example 11 of the present invention at room temperature with a charge and discharge rate of C/3 and upper cutoff voltages of 4.3 V, 4.5 V, and 4.7 V, respectively.

Fig. 11 shows a scanning electron microscope image of the lithium metal anode of the anode-free lithium metal pouch cell assembled in Example 12 of the present invention in a charged state after 10 cycles.

Fig. 12 (a) and (b) are the XRD and corresponding 2D-XRD of the lithium metal anode of the anode-free lithium metal pouch cell assembled in Example 12 of the present invention in the charged state after 10 cycles, and Fig. 12 (c) and (d) are the XRD and corresponding 2D-XRD of the lithium metal anode of the anode-free lithium metal pouch cell assembled in Comparative Example 2 in the charged state after 1 cycle.

Fig. 13 shows results of XPS analysis of the lithium metal anode of the anode-free lithium metal pouch cell assembled in Example 12 of the present invention after 10 cycles.

Fig. 14 shows results of XPS analysis of the NCM811 cathode of the anode-free lithium metal pouch cell assembled in Example 12 of the present invention after 10 cycles.

Fig. 15(a) shows charge/discharge curves of the anode-free lithium metal pouch cell assembled in Example 12 of the present invention at room temperature, with a voltage window of 2.8 to 4.4 V and a charging rate of C/5 and a discharging rate of C/2 for different cycle numbers; Fig. 15(b) shows the cycling performance diagram of the anode-free lithium metal pouch cell assembled in Example 12 and Comparative Example 2 of the present invention.

Fig. 16 shows a cycling performance diagram of the anode-free lithium metal pouch cell assembled in Example 13 of the present invention at room temperature, with a voltage window of 3.7 to 4.3 V and a charging rate of C/5 and a discharging rate of C/2.

Fig. 17 shows a cycling performance diagram of the anode-free lithium metal pouch cell assembled in Example 14 of the present invention at room temperature, with a voltage window of 2.8 to 4.25 V and a charging rate of C/5 and a discharging rate of C/2.

Fig. 18(a) shows charge/discharge curves of the anode-free lithium metal pouch cell assembled in Example 15 of the present invention at room temperature, with a voltage window of 3.6 to 4.25 V and a charging rate of C/5 and a discharging rate of C/2, at different cycle numbers; Fig. 18(b) shows the cycling performance diagram.

Fig. 19 shows the cycling performance diagrams of the lithium metal pouch cell assembled in Example 16 and Comparative Example 3 of the present invention at room temperature and a charge and discharge rate of C/3.

Fig. 20 shows charge/discharge curves of the graphite electrode in the coin cell assembled in Example 17 and Comparative Example 5 of the present invention.

Fig. 21 shows the cycling performance diagram of the coin cell assembled in Example 17 of the present invention with respect to the graphite electrode.

Fig. 22(a) shows a flammability test of the electrolyte 2 provided in Example 1 of the present invention; Fig. 22(b) shows a flammability test of the electrolyte provided in Example 18 of the present invention.

Fig. 23 shows a cycling performance diagram of the anode-free lithium metal pouch cell assembled in Example 19 of the present invention at room temperature, with a voltage window of 3.6 to 4.3 V and a charging rate of C/5 and a discharging rate of C/2.

## Specific Embodiments

In order to more fully understand the technical content of the present invention, the present invention is further described in detail below in conjunction with specific examples. It should be understood that the specific examples described herein are only for illustrating the present invention and are not intended to limit the scope of the present invention.

## General battery assembly and testing methods:

Assemble of CR2032 coin cells: in an argon-filled glove box, an anode shell, a spring, a spacer, a lithium sheet, a separator, an electrolyte, a cathode sheet, and a cathode shell were assembled in the order and then compressed and packaged using a packaging machine, wherein the cathode sheet was one of a ternary lithium nickel cobalt manganese oxide cathode material $Li[Ni_{0.5}Mn_{0.2}Co_{0.3}]O_2$ (NCM523), $Li[Ni_{0.6}Mn_{0.2}Co_{0.2}]O_2$ (NCM622), $Li[Ni_{0.8}Mn_{0.1}Co_{0.1}]O_2$ (NCM811), or $Li[Ni_{0.9}Mn_{0.05}Co_{0.05}]O_2$ (NCM955), a lithium-rich manganese oxide cathode (LMR), a lithium nickel manganese oxide cathode (LNMO), a lithium iron phosphate cathode ($LiFePO_4$), a lithium manganese oxide cathode ($LiMn_2O_4$), and a lithium cobalt oxide cathode ($LiCoO_2$), which were purchased from Dongguan Canrud Co. Ltd.; the anode was a lithium sheet with a thickness of 250 μm, which was purchased from China Energy Lithium Co., Ltd.; and the separator was a polyethylene (PE) separator purchased from Celgard.

Galvanostatic charge-discharge tests of lithium metal coin cell: the electrochemical performance of CR2032 lithium metal coin cell was tested at a constant current within a set voltage range using a Neware battery test system; unless otherwise specified, the battery was tested at 25 °C; the nominal capacity was set based on the selected cathode material system, and unless otherwise specified, 1C=165 mA/g (NCM523), 1C=170 mA/g (NCM622), 1C=200 mA/g (NCM811), 1C=210 mA/g (NCM955), 1C=250 mA/g (LMR), 1C=150 mA/g (LNMO), 1C=170 mA/g ($LiFePO_4$), 1C=110 mA/g ($LiMn_2O_4$), 1C=165 mA/g ($LiCoO_2$), and the charge and discharge current density range is C/10-1C. Unless otherwise specified, the charge/discharge current density for the first two cycles is C/10, and then the charge and discharge cycle is performed at a current density of C/3.

Method for preparing lithium metal pouch cell or anode-free lithium metal pouch cell: the batteries were assembling in the order of laminating, tab welding, top and side sealing, electrolyte injecting, and packaging, wherein the electrolyte injecting and packaging were performed in a glove box and the packaging was conducted using a vacuum pre-sealing machine. Unless otherwise specified, the electrolyte injection amount of the pouch cell is 1.5 to 3 g/Ah. In order to realize a lithium metal pouch cell under practical conditions, all the parameters of the pouch cell in the present invention were similar to those of commercial lithium-ion pouch cell. Among them, the cathode sheet was one of the double-coated high-nickel ternary cathode lithium nickel-cobalt manganese oxide $Li[Ni_{0.8}Mn_{0.1}Co_{0.1}]O_2$ (NCM811) and $Li[Ni_{0.9}Mn_{0.05}Co_{0.05}]O_2$ (NCM955) that had been cut to size, which were purchased from Shenzhen DX Time Technology Co. Ltd.; the anode was a lithium-copper composite tape where a 20 μm thick lithium foil was composited on a 5 μm thick copper foil, which was purchased from China Energy Lithium Co., Ltd., or a lithium-free 5 μm thick copper foil current collector, which was purchased from Suzhou Qiandingli Electronic Technology Co. Ltd.; the separator was a 12 μm thick polyethylene (PE) separator, which was purchased from Celgard; and the aluminum tabs, nickel tabs and 113 μm thick aluminum-plastic film were purchased from Shenzhen Kejing Co. Ltd.

The battery cycle life is defined as the number of cycles at which the capacity retention is 80%, and the depth of discharge (DoD) is defined as the discharge capacity of the first cycle divided by the battery theoretical capacity.

The energy density of pouch cell is calculated by the following equation:

$$E = C \cdot V / W$$

wherein E is the mass energy density of the battery (in Wh/kg); C is the capacity of the battery (in Ah), which is related to the specific capacity and loading amount of the cathode material; V is the voltage of the battery (in V), usually the median voltage of the discharge process; W is the total weight of the battery (in kg), which is defined as the various material components used to construct the entire pouch cell including the cathode, anode, electrolyte, current collector, separator and tab.

Galvanostatic charge-discharge tests of lithium metal pouch cell or anode-free lithium metal pouch cell: the tests were performed at a constant current within a set voltage range using a Neware battery test system. The lithium metal pouch cell or anode-free lithium metal pouch cell were placed in a fixture with a pressure of 200 kPa for testing. Unless otherwise specified, the battery was tested at 25°C. The nominal capacity was set based on the selected cathode material system, and unless otherwise specified, 1C=200 mA/g (NCM811), 1C=210 mA/g (NCM955), and the current density range was C/10-1C. Unless otherwise specified, the charge and discharge current density for the first two cycles was C/10, and then the charge and discharge cycle were performed with a charge current density of C/5 and a discharge current density of

C/2.

**Example 1**

The electrolytes 1-10 and the electrolyte 12 were prepared as follows: the lithium salt and the solvent were mixed in an argon-filled glove box according to the relevant parameters shown in Table 1, and stirred until the lithium salt was completely dissolved and the solution was clear and transparent, so as to obtain the corresponding electrolyte.

The electrolyte 11 is a commercial carbonate electrolyte purchased from Suzhou DodoChem Reagent Company, in which the lithium salt component of the electrolyte is $LiPF_6$, the solvent is a mixed carbonate solvent, in which the mass ratio of ethylene carbonate (EC) to dimethyl carbonate (DMC) is 1 : 1, and the lithium salt concentration is 1 mol/L.

The electrolytes 1-4 and 8-9 are electrolytes according to the present invention, and the electrolytes 5-7 and 10-12 are for comparison.

**Coulombic efficiency test**

Lithium/copper (Li||Cu) coin cells were prepared as follows for the Coulombic efficiency tests of the electrolytes 1-12: a metallic lithium was selected as the counter electrode and reference electrode, the working electrode was copper foil purchased from Shenzhen Kejing Co. Ltd., and the separator was a polyethylene (PE) separator. 70 μL of an electrolyte was injected into the coin cell in an argon-filled glove box to complete the battery assembly.

The test conditions of the Li||Cu coin cell were as follows: discharging at a current density of 0.2 $mA/cm^2$ with a areal capacity of the lithium metal deposition of 1.0 $mAh/cm^2$, then charging to a cut-off upper limit voltage of 1.5 V, and performing charge/ discharge cycle under this condition, and the average Coulombic efficiency of the first 50 cycles was calculated.

**Oxidation stability potential test**

Lithium/aluminum (Li||Al) coin cell was prepared as follows for testing the electrochemical stability windows of the electrolytes 1 to 12: a metallic lithium was selected as the counter electrode and reference electrode, the working electrode was aluminum foil purchased from Shenzhen Kejing, and the separator was a polyethylene (PE) separator. 70 μL of an electrolyte was injected into the coin cell in an argon-filled glove box to complete the battery assembly.

The test conditions for lithium/aluminum coin cells were as follows: linear sweep voltammetry was used to scan from the open circuit potential to the cut-off potential of 6 V at a scan rate of 1 mV/s to test the electrochemical stability window of the electrolyte. The potential corresponding to the oxidation current reaching 20 $\mu A/cm^2$ is defined as the oxidation stability potential of the electrolyte.

Table 1 lists the formulations of the 12 electrolytes and the obtained average Coulombic efficiencies and oxidation stability potentials.

**Table 1**

| Sample No. | Lithium Salt | Solvent | Concentration of the Lithium salt | Average Coulombic efficiency of 50 cycles (%) | Oxidation stability potential |
|---|---|---|---|---|---|
| Electrolyte 1 | LiDFOB | N,N-dimethyl trifluoroacetamide | 1 M | 95.2% | 5.2 V |
| Electrolyte 2 | LiDFOB | N,N-dimethyl trifluoroacetamide | 1.6 M | 98.4% | 5.2 V |
| Electrolyte 3 | LiDFOB | N,N-dimethyl trifluoroacetamide | 1.9 M | 98.5% | 5.2 V |
| Electrolyte 4 | LiDFOB | N,N-dimethyl trifluoroacetamide | 2.4 M | 98.5% | 5.3 V |
| Electrolyte 5 | $LiPF_6$ | N,N-dimethyl trifluoroacetamide | 1 M | 12.5% | 5.1 V |
| Electrolyte 6 | LiFSI | N,N-dimethyl trifluoroacetamide | 1 M | 27.0% | 4.7 V |
| Electrolyte 7 | LiTFSI | N,N-dimethyl trifluoroacetamide | 1 M | 18.3% | 4.9 V |

(continued)

| Sample No. | Lithium Salt | Solvent | Concentration of the Lithium salt | Average Coulombic efficiency of 50 cycles (%) | Oxidation stability potential |
|---|---|---|---|---|---|
| Electrolyte 8 | LiBOB | N,N-dimethyl trifluoroacetamide | 1 M | 76.0% | 5.2 V |
| Electrolyte 9 | LiDFOB | N-methoxy-N-methyl trifluoroacetamide | 1 M | 92.4% | 5.2 V |
| Electrolyte 10 | LiDFOB | Ethylene glycol dimethyl ether | 1 M | 16.8% | 4.9 V |
| Electrolyte 11 | $LiPF_6$ | Dimethyl carbonate/ Ethylene carbonate | 1 M | 92.6% | 4.5 V |
| Electrolyte 12 | LiTFSI | Ethylene glycol dimethyl ether/ 1,3-Dioxolane | 1 M | 97.2% | 4.4 V |

As can be seen from the results in Table 1, the electrolytes comprising a lithium borate salt and a trifluoroacetamide compound according to the present invention (the electrolytes 1 to 4 and the electrolytes 8 and 9) show high Coulombic efficiencies and high oxidation stability potentials, while the electrolytes combining a lithium salt and a solvent not according to the present invention (the electrolytes 5 to 7 and the electrolytes 10 to 12) show low Coulombic efficiencies or oxidation stability potentials.

Among them, the electrolyte 2 is preferred due to its high conductivity, moderate viscosity, high Coulombic efficiency and oxidation stability window, and used for the main electrochemical performance test.

**Example 2:**

A lithium/aluminum (Li||Al) coin cell was prepared as follows: a metallic lithium was selected as the counter electrode and the reference electrode, the working electrode was aluminum foil purchased from Shenzhen Kejing Co. Ltd., and the separator was a polyethylene (PE) separator. 70 μL of the electrolyte 2 provided in Example 1 was injected into the coin cell in an argon-filled glove box.

The potentiostatic polarization was tested by maintaining each constant potential for 3 hours at intervals of 0.2V between the voltage range from 4 V to 6 V (4.0 V, 4.2 V, 4.4 V, 4.6 V, 4.8 V, 5.0 V, 5.2 V, 5.4 V, 5.6 V, 5.8 V, 6.0 V), and the static oxidation current was measured at each potential.

The potentiostatic polarization test provides more accurate oxidation voltage information for the electrolyte. As shown in Fig. 1, no static current corresponding to electrolyte oxidation appeared at each potential in the voltage range of 4 to 5 V, indicating that the electrolyte 2 provided in Example 1 has a wide electrochemical stability window of 5V. A weak static current was detected after 5.2 V, indicating that a slow parasitic reaction occurred.

**Example 3:**

A lithium metal coin cell (Li||NCM523) was prepared as follows: the cathode sheet contained 94 wt.% ternary lithium nickel-cobalt manganese oxide $Li[Ni_{0.5}Mn_{0.2}Co_{0.3}]O_2$ (NCM523) with the active material loading amount at the single-side electrode of 9.4 mg/cm$^2$; the electrolyte 2 provided in Example 1 was used to assemble a CR2032 coin cell in an argon-filled glove box.

In the electrochemical performance test, the voltage range was set at 2.8-4.3 V, 2.8-4.5 V, and 2.8-4.7 V.

As shown in Fig. 2, with the increase of the upper cut-off voltage, the specific capacity of NCM523 increased from 165 mAh/g and 191 mAh/g to 214 mAh/g, and the specific capacity increased by 30%.

**Example 4:**

A lithium metal coin cell (Li||NCM622) was prepared as follows: the cathode sheet contained 96.5 wt.% high-nickel lithium nickel cobalt manganese oxide $Li[Ni_{0.6}Mn_{0.2}Co_{0.2}]O_2$ (NCM622) with the active material loading amount at the single-side electrode of 10 mg/cm$^2$; the electrolyte 2 provided in Example 1 was used to assemble a CR2032 coin cell in an argon-filled glove box .

In the electrochemical performance test, the voltage range was set at 2.8-4.3 V, 2.8-4.5 V, 2.8-4.7 V, and 2.8-4.9

V.

As shown in Fig. 3, with the increase of the upper cut-off voltage, the specific capacity of NCM622 increased from 178 mAh/g, 198 mAh/g and 218 mAh/g to 227 mAh/g, and the specific capacity increased by 27.5%.

**Example 5:**

A lithium metal coin cell (Li||NCM811) was prepared as follows: the cathode sheet contained 94.5 wt.% high-nickel lithium nickel cobalt manganese oxide $Li[Ni_{0.8}Mn_{0.1}Co_{0.1}]O_2$ (NCM811) with the active material loading amount at the single-side electrode of 21.5mg/cm$^2$; the electrolyte 2 provided in Example 1 was used to assemble a CR2032 coin cell in an argon-filled glove box.

In the electrochemical performance test, the voltage range was set at 2.8-4.3 V, 2.8-4.5 V, 2.8-4.6 V, 2.8-4.7 V, and 2.8-4.8 V.

As shown in Fig. 4, with the increase of the upper cut-off voltage, the specific capacity of NCM811 increased from 197 mAh/g, 215 mAh/g, 221 mAh/g, and 227 mAh/g to 230 mAh/g, and the specific capacity increased by 17%.

**Example 6:**

A lithium metal coin cell (Li||NCM955) was prepared as follows: the cathode sheet contained 96.5 wt.% high-nickel lithium nickel cobalt manganese oxide $Li[Ni_{0.9}Mn_{0.05}Co_{0.05}]O_2$ (NCM955) with the active material loading amount at the single-side electrode of 6.7 mg/cm$^2$; the electrolyte 2 provided in Example 1 was used to assemble a CR2032 coin cell in an argon-filled glove box.

In the electrochemical performance test, the voltage range was set at 2.8-4.3 V, 2.8-4.5 V, and 2.8-4.7 V.

As shown in Fig. 5, with the increase of the upper cut-off voltage, the specific capacity of NCM955 increased from 213 mAh/g and 231 mAh/g to 239 mAh/g, and the specific capacity increased by 12%.

**Example 7:**

A lithium metal coin cell (Li||LMR) was prepared as follows: the cathode sheet contained 80 wt.% lithium-rich manganese oxide (LMR) with the active material loading amount at the single-side electrode of 2.17 mg/cm$^2$; the electrolyte 2 provided in Example 1 was used to assemble a CR2032 coin cell in an argon-filled glove box.

In the electrochemical performance test, the charge and discharge rate were C/2 and the voltage range was set at 2.0-4.8 V.

As shown in Fig. 6, the specific capacity of the lithium-rich manganese oxide cathode (LMR) at an upper voltage of 4.8 V was 287 mAh/g, which was significantly higher than the specific capacity of the high-nickel NCM cathode material.

**Example 8:**

The lithium metal coin cell (Li||LNMO) was prepared as follows: the cathode sheet contained 90 wt.% high-voltage lithium nickel manganese oxide (LNMO) with the active material loading amount at the single-side electrode of 10 mg/cm$^2$; the electrolyte 2 provided in Example 1 was used to assemble a CR2032 coin cell in an argon-filled glove box.

In the electrochemical performance test, the charge and discharge rate were 1C and the voltage range was set at 3.0-4.9 V.

As shown in Fig. 7, the specific capacity of lithium nickel manganese oxide (LNMO) was 121 mAh/g at the upper voltage of 4.9 V.

**Example 9:**

A lithium metal coin cell (Li||$LiFePO_4$) was prepared as follows: the cathode sheet contained 91.5 wt.% lithium iron phosphate ($LiFePO_4$) with the active material loading amount at the single-side electrode of 11.5 mg/cm$^2$; the electrolyte 2 provided in Example 1 was used to assemble a CR2032 coin cell in an argon-filled glove box.

In the electrochemical performance test, the charge and discharge rate were C/2 and the voltage range was set at 3.0-3.8 V.

As shown in Fig. 8, the specific capacity of the lithium iron phosphate cathode ($LiFePO_4$) at the upper voltage limit of 3.8 V is 168 mAh/g.

**Example 10:**

A lithium metal coin cell (Li||$LiMn_2O_4$) was prepared as follows: the cathode sheet contained 95 wt.% lithium

manganese oxide ($LiMn_2O_4$) with the active material loading amount at the single-side electrode of 10 mg/cm$^2$; the electrolyte 2 provided in Example 1 was used to assemble a CR2032 coin cell in an argon-filled glove box.

In the electrochemical performance test, the charge and discharge rate were C/2 and the voltage range was set at 3.0-4.3 V.

As shown in Fig. 9, the specific capacity of the lithium manganese oxide ($LiMn_2O_4$) cathode at the upper voltage limit of 4.3 V is 116 mAh/g.

**Example 11:**

A lithium metal coin cell (Li||$LiCoO_2$) was prepared as follows: the cathode sheet contained 96.4 wt.% lithium cobalt oxide ($LiCoO_2$) with the active material loading amount at the single-side electrode of 10.7 mg/cm$^2$; the electrolyte 2 provided in Example 1 was used to assemble a CR2032 coin cell in an argon-filled glove box.

In the electrochemical performance test, the charge and discharge rate were C/2, and the voltage range was set at 3-4.3 V, 3-4.5 V, and 3-4.6 V.

As shown in Fig. 10, with the increase of the upper cut-off voltage, the specific capacity of the lithium cobalt oxide ($LiCoO_2$) cathode increased from 167 mAh/g and 200 mAh/g to 229 mAh/g, and the specific capacity increased by 37%.

**Example 12:**

An anode-free lithium metal pouch cell (Cu||NMC811) was prepared as follows: the cathode sheet contained 97.3 wt.% high-nickel lithium nickel cobalt manganese oxide $Li[Ni_{0.8}Mn_{0.1}Co_{0.1}]O_2$ (NCM811) with the active material loading amount at the single-side electrode of 25.5 mg/cm$^2$, and the unit areal loading amount was 5.5 mAh/cm$^2$; the electrolyte 2 provided in Example 1 was injected in an argon-filled glove box. The voltage range of the anode-free lithium metal pouch cell was 2.8 V to 4.4 V (100% DoD). Using a two-layer stacking structure, the cell capacity was 0.52 Ah, and the corresponding energy density was 522 Wh/kg; and using a ten-layer stacking structure, the cell capacity was 2.6 Ah, and the corresponding energy density was 541 Wh/kg.

**Comparative Example 1:**

Commercial carbonate electrolyte was used, i.e., the electrolyte 11 in Example 1.

**Comparative Example 2:**

The preparation method of the anode-free lithium metal pouch cell was the same as that in Example 12, except that the electrolyte injected into the pouch cell in the glove box adopted the electrolyte provided in Comparative Example 1.

The electrochemical performance test conditions were the same as those in Example 12.

Fig. 11 shows a scanning electron microscope image of the charge-state lithium metal anode of the anode-free lithium metal pouch cell assembled in Example 12 of the present invention after 10 cycles. The morphology of the charge-state lithium metal anode after 10 cycles shows that the deposited lithium grains in Example 12 are densely packed, and the deposited lithium is smooth and flat in morphology with a small surface area, thus having better capacity retention ability.

Fig. 12 (a) and (b) are the XRD and corresponding 2D-XRD patterns of the charge-state lithium metal anode of anode-free lithium metal pouch cell assembled in Example 12 of the present invention after 10 cycles. As shown in Fig. 12 (a), which is the XRD analysis of the deposited lithium metal in Example 12, only the diffraction peaks of the Li (110) facet can be observed, indicating that the growth of lithium metal grains is dominated by the Li (110) crystal plane during the lithium deposition process. The 2D-XRD in Fig. 12 (b) also shows that the deposited lithium metal has an obvious oriented growth and exhibits strong texture characteristics.

For the anode-free lithium metal pouch cell assembled in Comparative Example 2, it was observed that the reversibility of lithium metal was extremely poor, and the loss of active lithium increased with the increase in the number of cycles. After 10 cycles, due to the large loss of active lithium, there was no obvious active lithium deposition morphology in the charged state, and a large amount of inactive lithium lost electrical contact with the current collector and adhered to the separator. After 1 cycle, although the deposition morphology of the dendrite structure was observed in the charged state, it still maintained electrical contact with the current collector, and the loss of active lithium was relatively small, so it can be used to study whether its electrodeposition has an oriented growth. Therefore, to compare the characteristics of lithium metal in the electrolyte of the present invention with directional deposition and growth, XRD and 2D-XRD were tested on the deposited lithium metal of anode-free pouch cell in Comparative Example 2 after 1 cycle, when a significant amount of deposited active lithium metal is retained. Fig. 12 (c) and (d) are the XRD and corresponding 2D-XRD of the charge-state lithium metal anode of the anode-free lithium metal pouch cell assembled in Comparative Example 2 after 1 cycle. As can

be seen from the figures, for the XRD of the lithium metal deposited in Comparative Example 2, almost no obvious diffraction peak of the $Li_{(110)}$ facet can be observed, and the 2D-XRD also shows no characteristic of oriented lithium growth, which may be the reason why the reversibility of lithium metal deposition and dissolution is poor in subsequent cycles of Comparative Example 2.

Figs. 13 and 14 are the XPS analysis of the lithium metal anode and the NCM811 cathode after 10 cycles, respectively. It can be observed that on the lithium anode side, the Li 1s, C 1s, B 1s, N 1s, O 1s, and F 1s spectra confirm the presence of obvious SEI film composed of lithium fluoride, lithium carbide, nitride, boron oxide, lithium oxide, boron oxynitride, etc., and similar analysis results are also observed on the cathode side.

Fig. 15(a) is charge/discharge curves of Example 12 at different cycles. As can be seen from Fig. 15(b), the cycling performance of the anode-free lithium metal pouch cell of Example 12 is greatly improved with a cycle life extending to 80 cycles; whereas the cycle life of the lithium metal pouch cell in Comparative Example 2 is only 4 cycles.

**Example 13:**

The anode-free lithium metal pouch cell provided in Example 12 was used, the charge and discharge voltage window was adjusted to test the long cycling performance within the voltage window of 3.7 V-4.3 V (70% DoD), so as to extend the lifespan of the anode-free lithium metal pouch cell.

As shown in Fig. 16, the cycle life of the anode-free lithium metal pouch cell extended to 280 cycles.

**Example 14:**

An anode-free lithium metal pouch cell (Cu||NMC955) was prepared as follows: the cathode sheet contained 96.5 wt.% ultra-high nickel lithium nickel cobalt manganese oxide $Li[Ni_{0.9}Mn_{0.5}Co_{0.5}]O_2$ (NMC955) with the active material loading amount at the single-side electrode of 26 mg/cm$^2$ and the corresponding areal capacity of 5.4 mAh/cm$^2$. The electrolyte 2 provided in Example 1 was injected in a glove box. The voltage range of the anode-free lithium metal pouch cell was 2.8 V to 4.25 V (100% DoD). When using a two-layer stacking structure, the battery capacity was 0.5 Ah, and the corresponding energy density was 506 Wh/kg; and when using a ten-layer stacking structure, the cell capacity was 2.5 Ah, and the corresponding energy density was 522 Wh/kg.

As shown in Fig. 17, the cycle life of the anode-free lithium metal pouch cell of Example 14 reaches 65 cycles.

**Example 15:**

The anode-free lithium metal pouch cell provided in Example 14 was used, and the charge and discharge voltage window was adjusted to test the long-term cycling performance within the voltage window of 3.6 V-4.25 V (82% DoD) to extend the lifespan of the anode-free lithium metal pouch cell.

Fig. 18 (a) shows the charge and discharge curves of Example 15 at different cycles. Fig. 18 (b) further shows that the ultra-high nickel anode-free lithium metal pouch cell exhibits stable cycling performance and the cycle life is extended to 140 cycles.

**Example 16:**

A lithium metal pouch cell (Li||NMC811) was prepared as follows: the cathode sheet contained 97.3 wt.% high-nickel ternary lithium nickel cobalt manganese oxide $Li[Ni_{0.8}Mn_{0.1}Co_{0.1}]O_2$ (NMC811) with the active material loading amount at the single-side electrode of 25.5 mg/cm$^2$, and a areal capacity was 5.5 mAh/cm$^2$; the anode was a lithium-copper composite tape where a 20 μm thick lithium foil placed on a 5 μm thick copper foil, and the electrolyte 2 provided in Example 1 was injected in a glove box with an electrolyte injection amount of 3 g/Ah.

The charge and discharge rate of the battery was C/3 and the voltage was limited between 2.8 V and 4.4 V (100% DoD). When using a two-layer stack, the cell capacity was 0.52 Ah, corresponding to an energy density of 417 Wh/kg; and when using a ten-layer stack, the capacity was 2.6 Ah, corresponding to an energy density of 433 Wh/kg.

**Comparative Example 3:**

The preparation method of the lithium metal pouch cell was the same as Example 16, except that the electrolyte injected into the pouch cell in the glove box adopted the electrolyte provided in Comparative Example 1.

The electrochemical performance test conditions were the same as those in Example 16.

As shown in Fig. 19, the cycling performance of the lithium metal pouch cell in Example 16 is greatly improved, and the capacity retention after 200 cycles exceeds 86%; whereas the capacity of the lithium metal pouch cell in Comparative Example 3 decays rapidly after 20 cycles to the point of cell failure.

Example 17:

A lithium/graphite coin cell was prepared as follows: a metallic lithium was selected as the counter electrode and the reference electrode, the working electrode comprised 95.7 wt.% graphite (purchased from Dongguan Canrud) with the active material loading amount at the single-side electrode of 5.8 $mg/cm^2$, the separator was a polyethylene (PE) separator, and 70 $\mu$L of the electrolyte 2 provided in Example 1 was injected into the coin cell in an argon-filled glove box.
In the electrochemical performance test, charge and discharge tests were carried out at a charge and discharge rate of C/5 in the voltage range of 0.005 V to 2.5 V.

Comparative Example 4:

A lithium-ion battery electrolyte was prepared as follows: the lithium salt was LiDFOB, the solvent was propylene carbonate (PC), and the molar ratio of the lithium salt to the solvent was 1:5.

Comparative Example 5:

The preparation method of the lithium/graphite coin cell was the same as that of Example 17, except that 70 $\mu$L of the electrolyte provided in Comparative Example 4 was injected into the coin cell in an argon-filled glove box.
The electrochemical performance test conditions were the same as those in Example 17.
Fig. 20 shows charge/discharge curves of the graphite anode in the coin cell assembled in Example 17 of the present invention and Comparative Example 5. As shown in the Fig. 20, the electrolyte of Comparative Example 4 is not compatible with the graphite anode, and the desolvation and intercalation of lithium ions cannot be proceeded in the graphite anode; by contrast, the electrolyte 2 provided in Example 1 is effectively compatible with the graphite electrode, and lithium ions can be reversibly intercalated and deintercalated in the graphite anode. As shown in Fig. 21, the electrolyte 2 provided in Example 1 can significantly enhance the lifespan of the graphite electrode.

**Example 18:**

A flame-retardant high-voltage lithium battery electrolyte was prepared as follows: the molar ratio of lithium difluoro(oxalato)borate to N,N-dimethyltrifluoroacetamide was 1:3, lithium difluoro(oxalato)borate was added to N,N-dimethyltrifluoroacetamide in an argon-filled glove box, stirred until the lithium salt was completely dissolved, and then methyl nonafluorobutyl ether was added so that the mass fraction of methyl nonafluorobutyl ether in the electrolyte reached 43%, thereby obtaining a flame-retardant high-voltage lithium battery electrolyte.
Ignition experiments were conducted on the electrolyte 2 provided in Example 1 and the flame-retardant high-voltage lithium battery electrolyte obtained in Example 18. As shown in Fig. 22(b), the electrolyte in Example 18 has a non-flammable property; whereas as shown in Fig. 22(a), the electrolyte 2 provided in Example 1 burned after ignition, showing no non-flammable property.

**Example 19:**

The preparation method of the anode-free lithium metal pouch cell was the same as that of Example 12, except that the electrolyte injected into the pouch cell in the glove box was the electrolyte provided in Example 18.
In the electrochemical performance test, the voltage range was set to 3.6-4.3V.
As shown in Fig. 23, for the cycling performance of the anode-free lithium metal pouch cell of Example 19, the capacity did not show a significant decay after 50 cycles, which indicates that the electrolyte of the present invention can solve the flammable issue of the electrolyte while enhancing the energy density of the battery, thereby greatly improving the safety property of lithium metal battery.
The above examples are preferred embodiments of the present invention, but the embodiments of the present invention are not limited to the above examples. Any other changes, modifications, substitutions, combinations, and simplifications that do not deviate from the spirit and principles of the present invention should be deemed as equivalent replacement embodiments that are included in the protection scope of the present invention.

## Claims

**1.** A lithium battery electrolyte comprising:

(1) a lithium borate salt represented by formula (I),

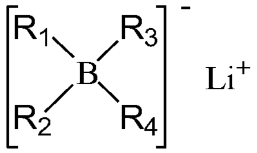 (I)

wherein $R_1$, $R_2$ consisting of F, -CN,

, $R_3$ and $R_4$

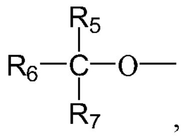,

are each independently selected from the group and Rs-Ar-O-;
wherein $R_5$, $R_6$ and $R_7$ are each independently selected from the group consisting of H, F, -CN, fluorinated C1-C4 alkyl, and Rs-Ar-, and at least one of $R_5$, $R_6$ and $R_7$ is not hydrogen;
Ar at each occurrence is independently phenyl or naphthyl;
Rs represents 1 to 7 substituents, each of which is independently selected from the group consisting of H, F, -CN, and fluorinated C1-C4 alkyl;
or
one or two pairs of $R_1$, $R_2$, $R_3$ and $R_4$ independently form

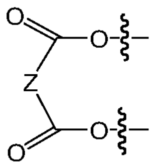,

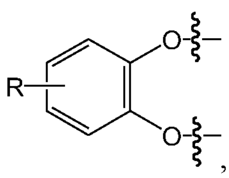, 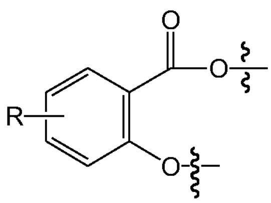 or 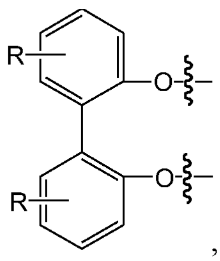,

wherein Z is a direct bond or a C1-C3 alkylene unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring,

(2) a trifluoroacetamide compound represented by formula (II):

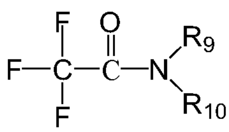 (II)

wherein $R_9$ and $R_{10}$ are each independently H, C1-C3 alkyl, fluorinated C1-C3 alkyl, C1-C3 alkoxy, fluorinated C1-C3 alkoxy, $R_{11}S(=O)_2$-, $R_{12}C(=O)$- or $(CH_3)_3Si$-;
$R_{11}$ and $R_{12}$ are each independently selected from the group consisting of fluorinated C1-C4 alkyl.

**2.** The lithium battery electrolyte according to claim 1, wherein
In formula (I),

one pair of $R_1$, $R_2$, $R_3$ and $R_4$ independently form

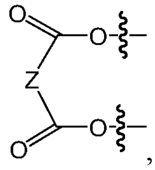,
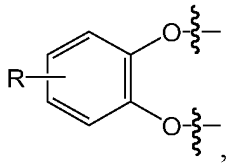,

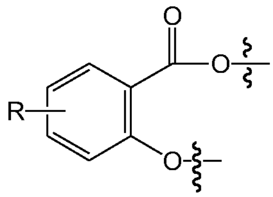
or
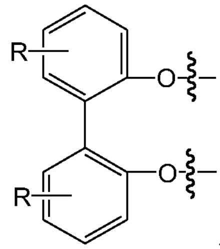,

wherein Z is a direct bond or a C1-C3 alkylene unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring;
the remaining two groups are each independently selected from the group consisting of F, -CN,

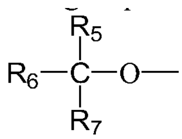

and Rs-Ar-O-;
wherein $R_5$, $R_6$ and $R_7$ are each independently selected from the group consisting of H, F, -CN, fluorinated C1-C4 alkyl (e.g. perfluoro C1-C4 alkyl, $-CH_2F$, $-CHF_2$), and Rs-Ar-, and at least one of $R_5$, $R_6$ and $R_7$ is not hydrogen;
Ar at each occurrence is independently phenyl or naphthyl;
$R_8$ represents 1 to 7 substituents, each of which is independently selected from the group consisting of H, F, -CN, and fluorinated C1-C4 alkyl;
or
$R_1$ and $R_2$, $R_3$ and $R_4$ each independently form

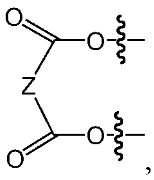,
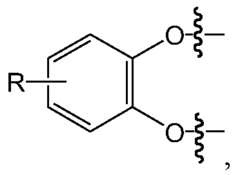,

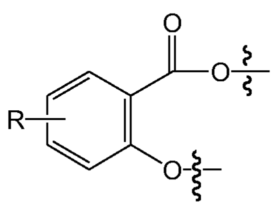
or
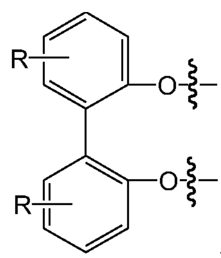,

wherein Z is a direct bond or a C1-C3 alkylene unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring;

or

$R_1$, $R_2$, $R_3$ and $R_4$ are each independently selected from the group consisting of F, -CN, and

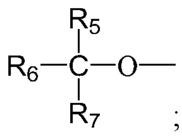
;

wherein $R_5$, $R_6$ and $R_7$ are each independently selected from the group consisting of H, F, -CN, fluorinated C1-C4 alkyl, and Rs-Ar-, and at least one of $R_5$, $R_6$ and $R_7$ is not hydrogen,

Ar is phenyl or naphthyl;

$R_8$ represents 1 to 7 substituents, each of which is independently selected from the group consisting of H, F, -CN, and fluorinated C1-C4 alkyl;

or

$R_1$, $R_2$, $R_3$ and $R_4$ are each independently selected from the group consisting of F and -CN;

or

$R_1$, $R_2$, $R_3$ and $R_4$ are each independently selected from the group consisting of F and

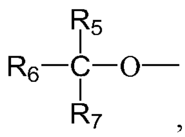
,

and at least one is

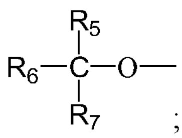
;

wherein $R_5$, $R_6$ and $R_7$ are each independently selected from the group consisting of H, F, -CN, fluorinated C1-C4 alkyl, and Rs-Ar-, and at least one of $R_5$, $R_6$ and $R_7$ is not hydrogen,

Ar is phenyl or naphthyl;

$R_8$ represents 1 to 7 substituents, each of which is independently selected from the group consisting of H, F, -CN, and fluorinated C1-C4 alkyl;

and/or

in formula (II), $R_{11}$ and $R_{12}$ are each independently selected from perfluorinated C1-C4 alkyl.

**3.** The lithium battery electrolyte according to claim 1, wherein In formula (I),

one pair of $R_1$, $R_2$, $R_3$ and $R_4$ independently form

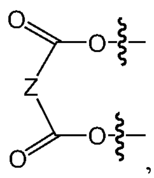
,
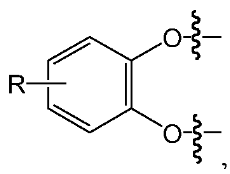
,

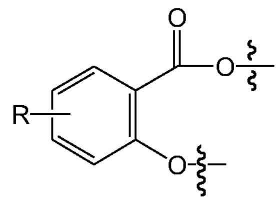 or 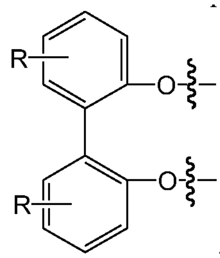 ,

wherein Z is a direct bond or a C1-C3 alkylene which is unsubstituted or substituted by one or more substituents selected from the group consisting of F, C1-C4 alkyl, and fluorinated C1-C4 alkyl; R at each occurrence independently represents 1 to 4 substituents, each of which is independently H or F, or two adjacent substituents together with the connected carbon atom form a benzene ring or a fluorine-substituted benzene ring;
the remaining two groups are each independently selected from the group consisting ofF and -CN; or the remaining two groups are both F; and/or
The fluorinated C1-C4 alkyl is a perfluorinated C1-C4 alkyl; and/or

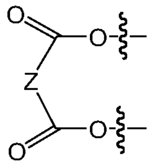 is 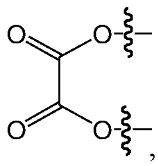 , 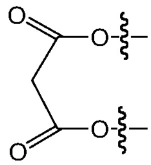 or 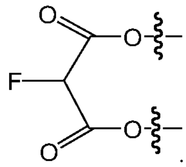 .

**4.** The lithium battery electrolyte according to claim 1, wherein

the lithium borate salt is selected from the group consisting of lithium difluoro(oxalato)borate, lithium difluoromalonatoborate, lithium difluoro-2-fluoromalonatoborate, lithium difluoro-2-methyl-2-fluoromalonatoborate, lithium difluoro-2-ethyl-2-fluoromalonatoborate, lithium difluoro-2-propyl-2-fluoromalonatoborate, lithium bis(oxalato)borate, lithium bis(malonato)borate, lithium bis(2-fluoromalonato)borate, LiBBB, LiBFBB, LiBTBB, LiBNB, LiBSB, LiBBPB, LiBDOB, lithium tetrafluoroborate, lithium tetracyanoborate, lithium tetra(fluoroalkoxy)borate, lithium tri(fluoroalkoxy)fluoroborate, lithium di(fluoroalkoxy)bisfluoroborate, lithium fluoroalkoxytrifluoroborate; in which
the fluoroalkoxy is represented by

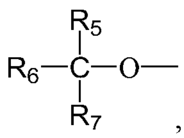 ,

wherein $R_5$, $R_6$ and $R_7$ are each independently selected from the group consisting of H, F, -CN, fluorinated C1-C4 alkyl, and Rs-Ar-, and at least one of $R_5$, $R_6$ and $R_7$ contains fluorine,
Ar is phenyl or naphthyl;
Rs represents 1 to 7 substituents, each of which is independently selected from the group consisting of H, F, -CN, and fluorinated C1-C4 alkyl;
and/or
the trifluoroacetamide compound can be one or more selected from the group consisting of N,N-dimethyltrifluoroacetamide, N-methoxy-N-methyltrifluoroacetamide, N-methyltrifluoroacetamide, N,N-diethyltrifluoroacetamide, N-(trifluoromethanesulfonyl)trifluoroacetamide, N-methyl-N-(trimethylsilyl)trifluoroacetamide, bis(trimethylsilyl)trifluoroacetamide (also known as N,O-bis(trimethylsilyl) trifluoroacetamide), N-methyl-N-(trimethylsilyl)trifluoroacetamide, N-methylbis(trifluoroacetyl)amine, trifluoroacetamide, and bistrifluoroacetamide.

**5.** The lithium battery electrolyte according to claim 4, wherein

the lithium borate salt is selected from the group consisting of lithium difluorooxalatoborate, lithium bis(oxalato) borate, lithium tetrafluoroborate, lithium tetracyanoborate, lithium tetra(fluoroalkoxy)borate, lithium tri(fluoroalkoxy)fluoroborate, lithium di(fluoroalkoxy)bisfluoroborate, lithium fluoroalkoxytrifluoroborate; or the lithium borate

salt is lithium difluorooxalatoborate; and/or
the trifluoroacetamide compound is N,N-dimethyltrifluoroacetamide.

**6.** The lithium battery electrolyte according to any one of claims 1 to 5, wherein

the molar ratio of the lithium borate salt to the trifluoroacetamide compound is 1: 1 to 1:100, 1:2 to 1:10 or 1:2.5 to 1:8; and/or
the molar concentration of the lithium borate salt is 0.1 to 5 mol/L or 0.8 to 2.5 mol/L.

**7.** The lithium battery electrolyte according to any one of claims 1 to 6, further comprising:

functional additives for electrolytes, and/or
flame retardant or inert diluent.

**8.** Use of the lithium borate salt described in any one of claims 1 to 5 and the trifluoroacetamide compound described in claim 1, 4 or 5 in combination for preparing a lithium battery electrolyte.

**9.** Use of the lithium battery electrolyte according to any one of claims 1 to 7 for preparing a lithium battery.

**10.** A lithium battery comprising the lithium battery electrolyte according to any one of claims 1 to 7.

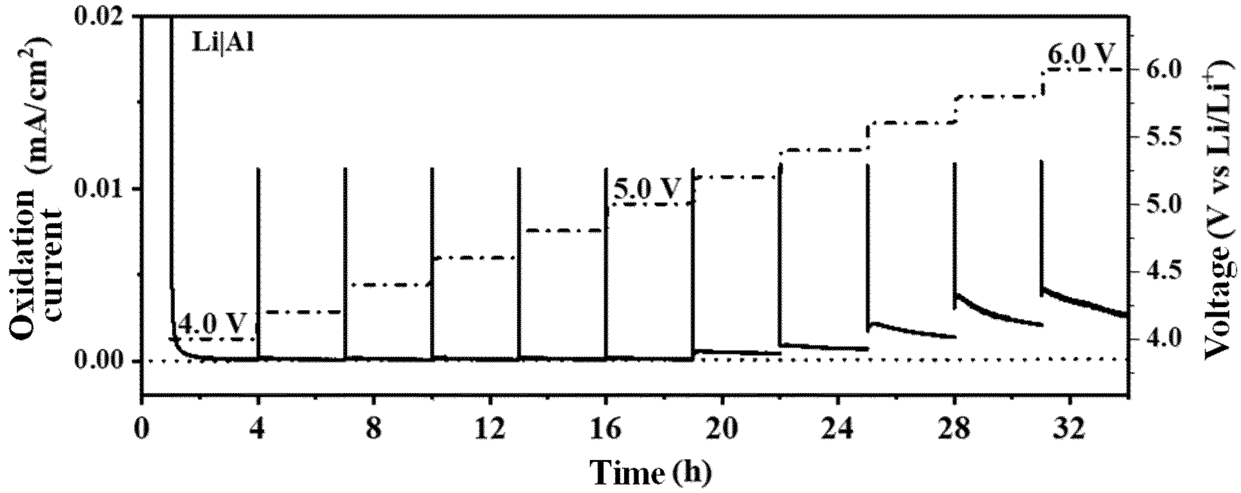
Li|Al
Oxidation current (mA/cm2)
Voltage (V vs Li/Li+)
Time (h)
4.0 V
5.0 V
6.0 V

Fig.1

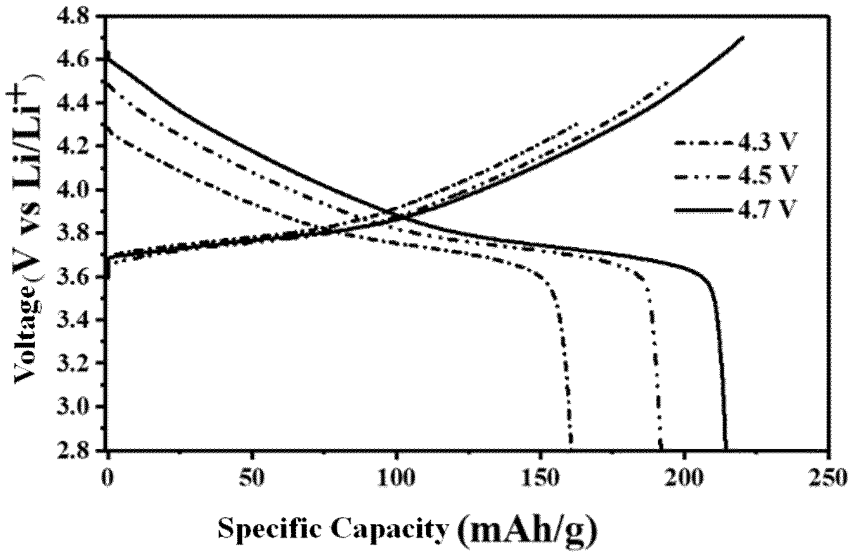
Voltage(V vs Li/Li+)
Specific Capacity (mAh/g)
4.3 V
4.5 V
4.7 V

Fig.2

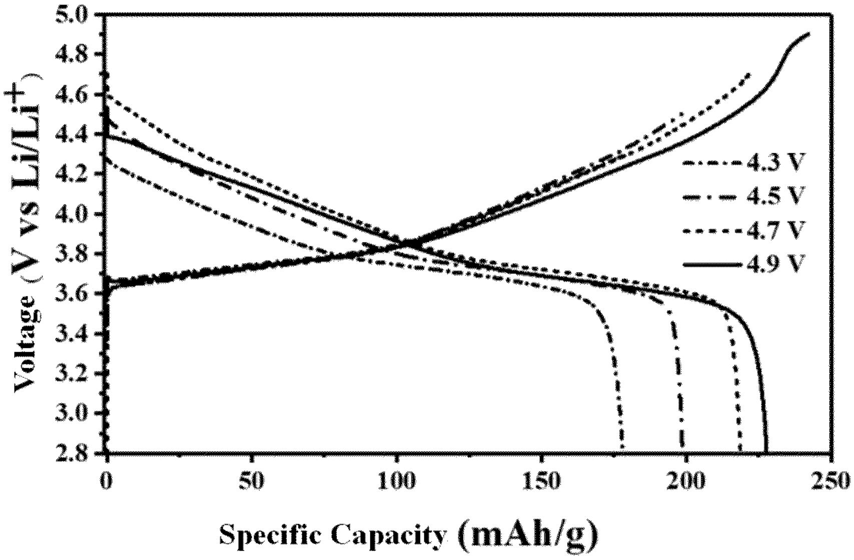
5.0
4.8
4.6
4.4
4.2
4.0
3.8
3.6
3.4
3.2
3.0
2.8
Voltage (V vs Li/Li+)
0
50
100
150
200
250
Specific Capacity (mAh/g)
4.3 V
4.5 V
4.7 V
4.9 V

Fig.3

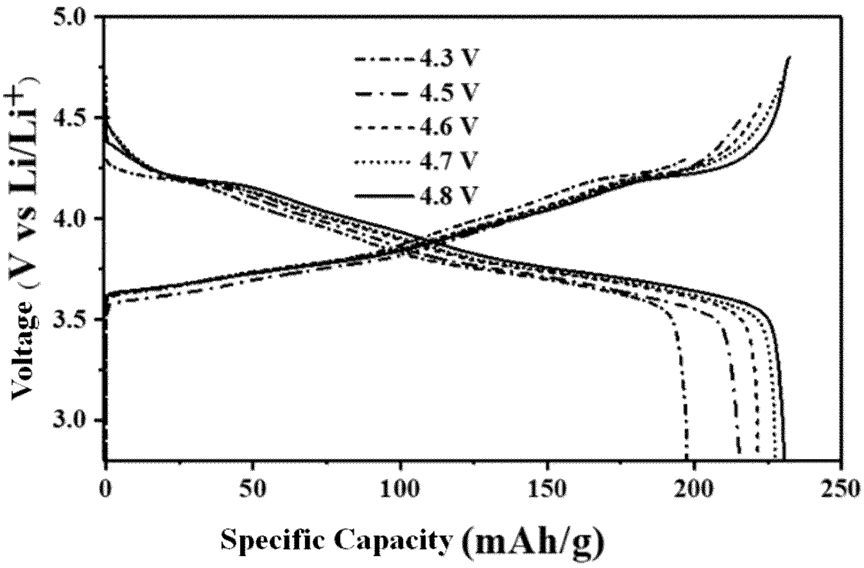
5.0
4.5
4.0
3.5
3.0
Voltage (V vs Li/Li+)
0
50
100
150
200
250
Specific Capacity (mAh/g)
4.3 V
4.5 V
4.6 V
4.7 V
4.8 V

Fig.4

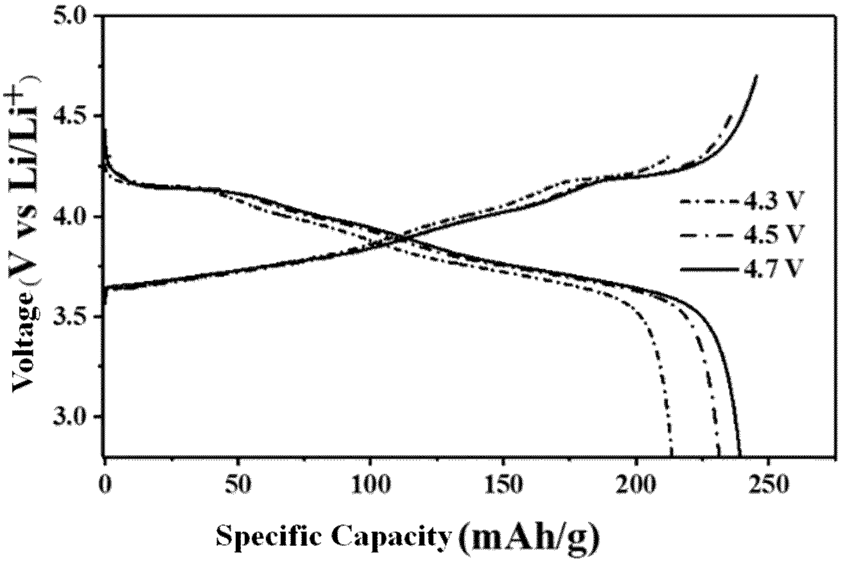
5.0
4.5
4.0
3.5
3.0
Voltage (V vs Li/Li+)
0
50
100
150
200
250
Specific Capacity (mAh/g)
4.3 V
4.5 V
4.7 V

Fig.5

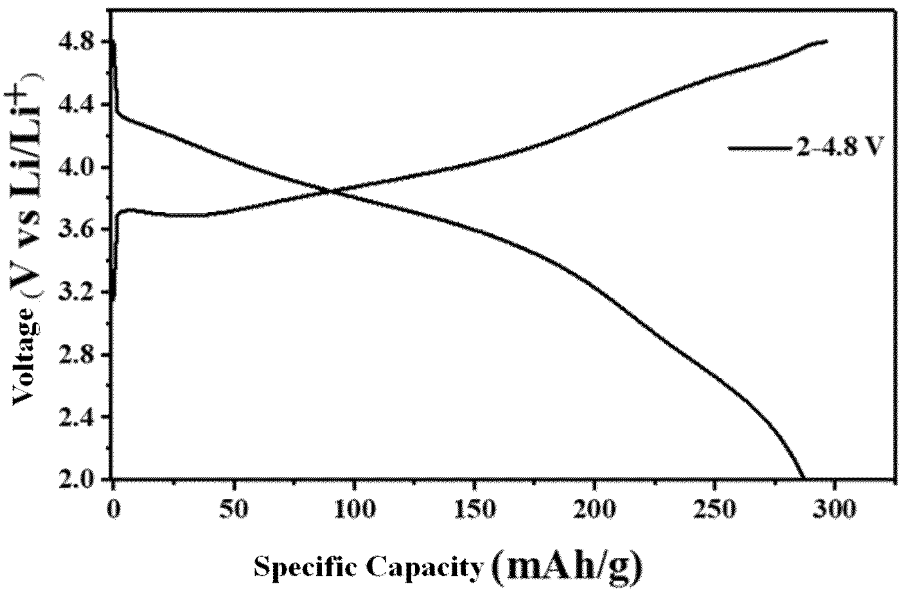
4.8
4.4
4.0
3.6
3.2
2.8
2.4
2.0
Voltage (V vs Li/Li+)
0
50
100
150
200
250
300
Specific Capacity (mAh/g)
2-4.8 V

Fig.6

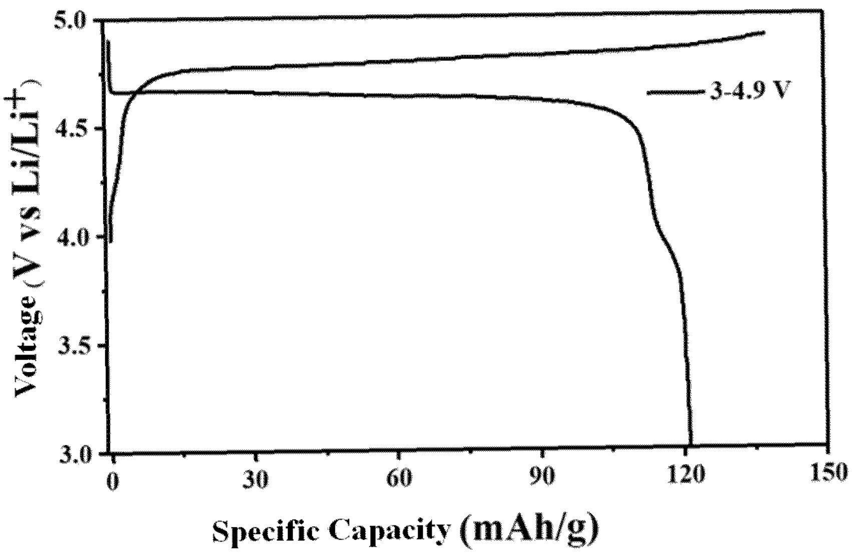
5.0
4.5
4.0
3.5
3.0
Voltage (V vs Li/Li+)
0
30
60
90
120
150
Specific Capacity (mAh/g)
3-4.9 V

Fig.7

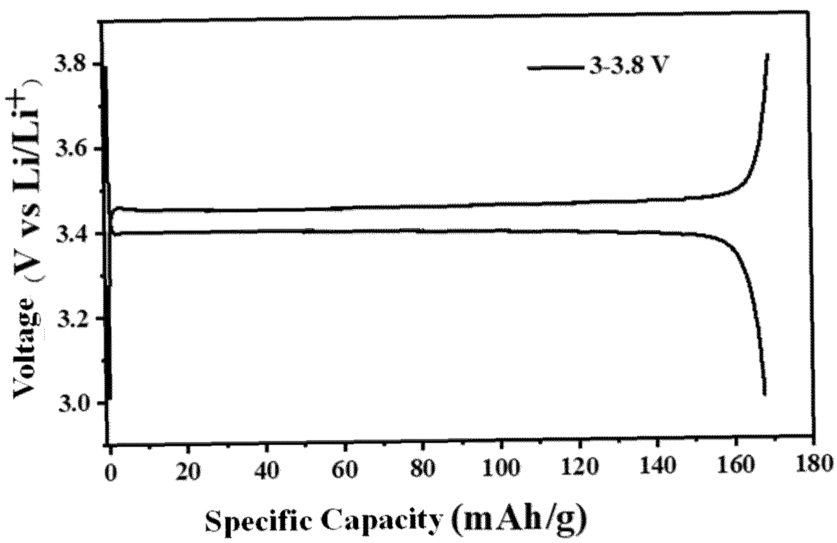
3.8
3.6
3.4
3.2
3.0
Voltage (V vs Li/Li+)
0
20
40
60
80
100
120
140
160
180
Specific Capacity (mAh/g)
3-3.8 V

Fig.8

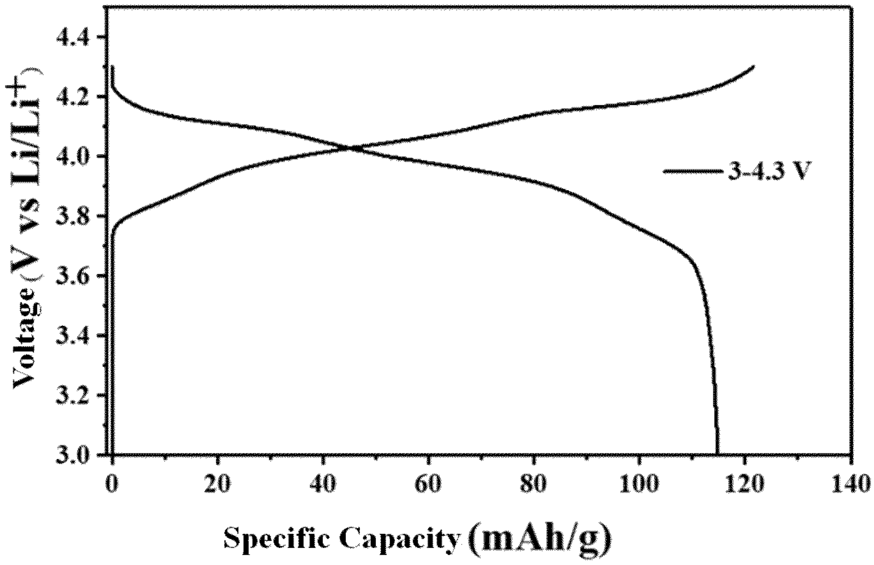
Voltage (V vs Li/Li+)
Specific Capacity (mAh/g)
3-4.3 V

Fig.9

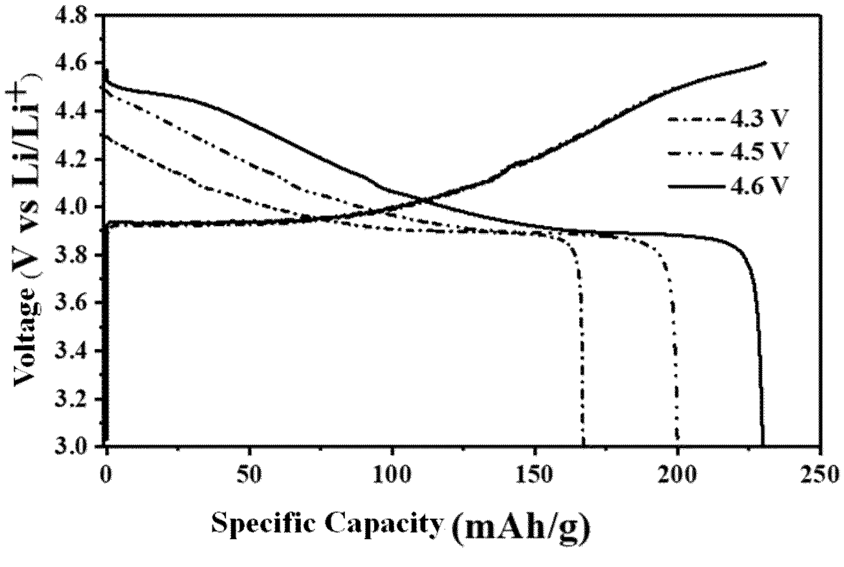
Voltage (V vs Li/Li+)
Specific Capacity (mAh/g)
4.3 V
4.5 V
4.6 V

Fig.10

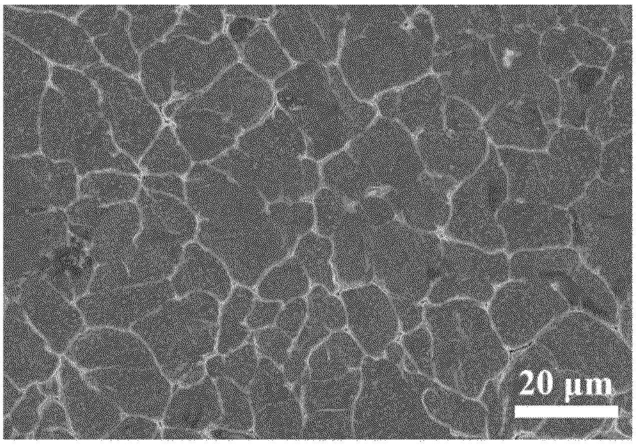
20 μm

Fig.11

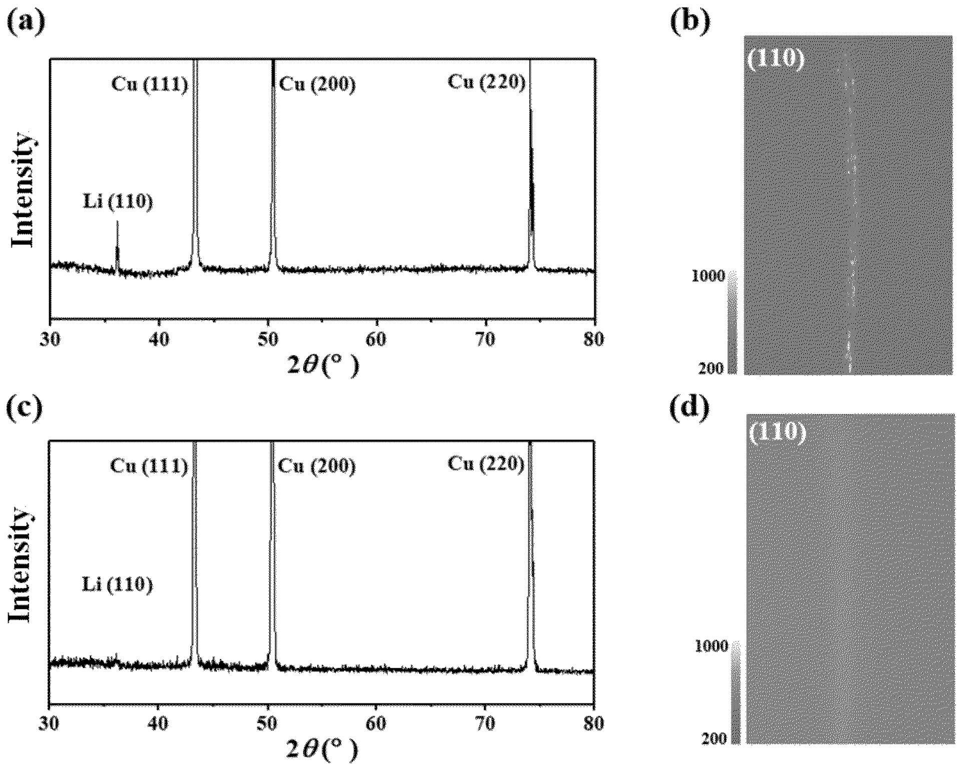
(a)
Cu (111)
Cu (200)
Cu (220)
Li (110)
Intensity
30
40
50
60
70
80
2θ(°)
(b)
(110)
1000
200
(c)
Cu (111)
Cu (200)
Cu (220)
Li (110)
Intensity
30
40
50
60
70
80
2θ(°)
(d)
(110)
1000
200

Fig.12

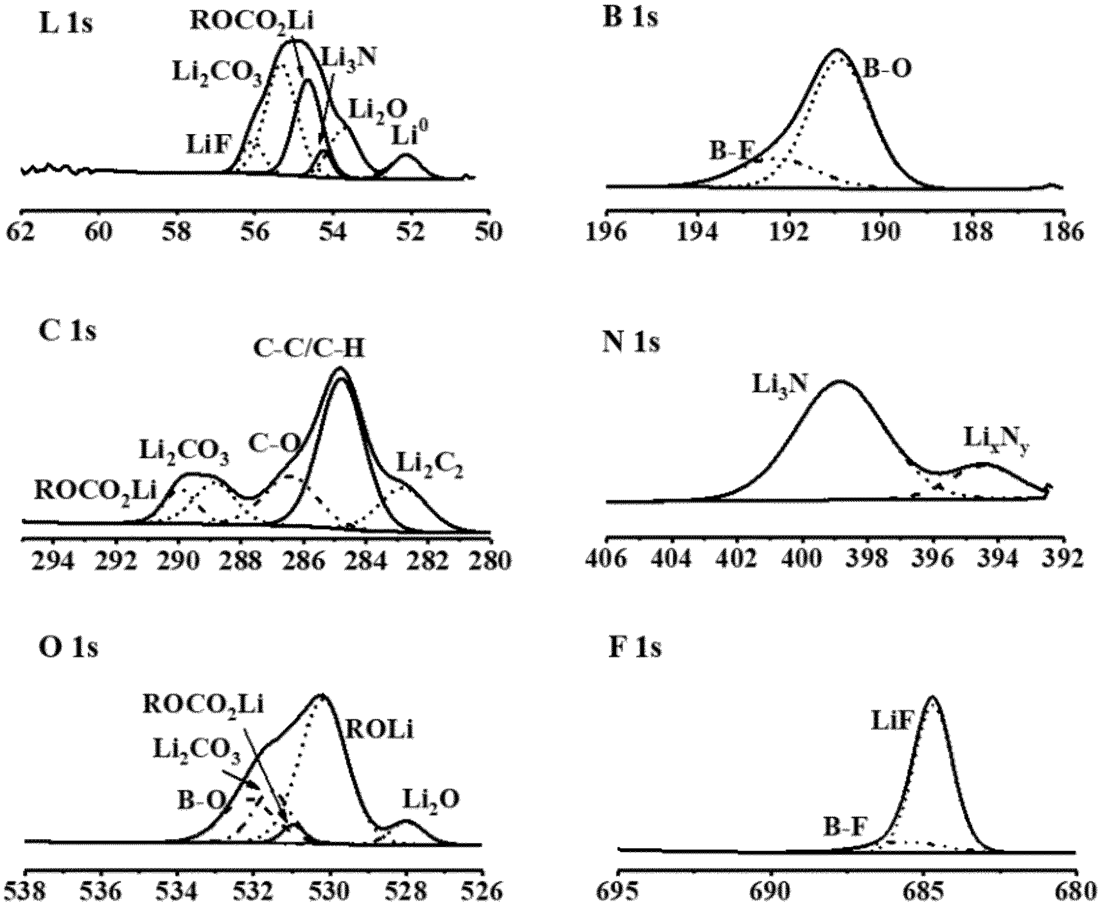
L 1s
ROCO2Li
Li2CO3
Li3N
Li2O
LiF
Li0
62 60 58 56 54 52 50
B 1s
B-O
B-F
196 194 192 190 188 186
C 1s
C-C/C-H
Li2CO3
C-O
Li2C2
ROCO2Li
294 292 290 288 286 284 282 280
N 1s
Li3N
LixNy
406 404 402 400 398 396 394 392
O 1s
ROCO2Li
ROLi
Li2CO3
B-O
Li2O
538 536 534 532 530 528 526
F 1s
LiF
B-F
695 690 685 680

Fig.13

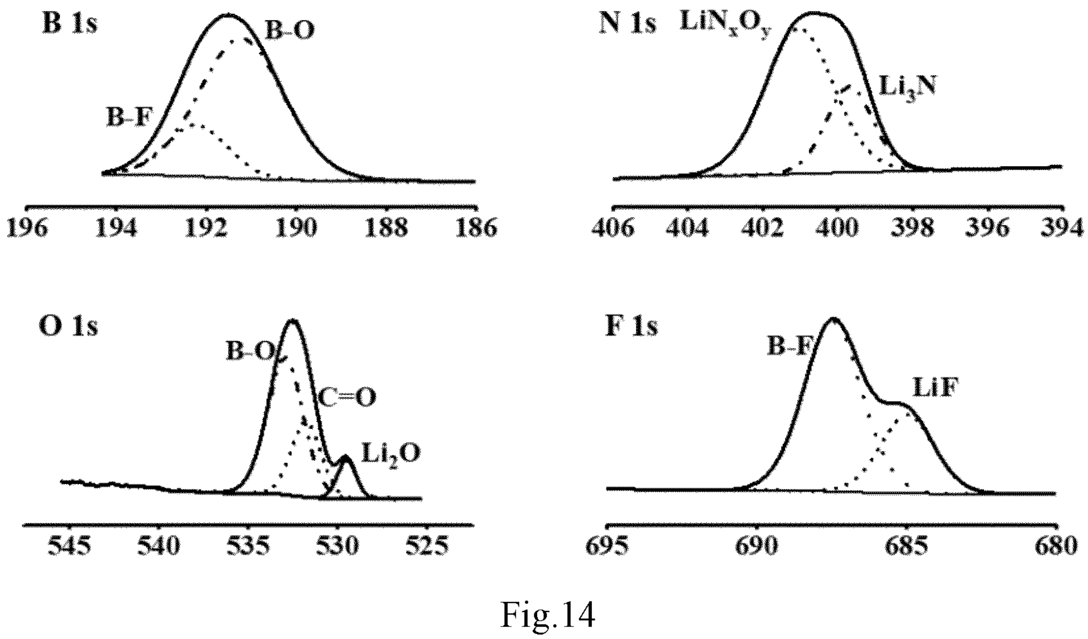
B 1s
B-O
B-F
196 194 192 190 188 186
N 1s
LiNxOy
Li3N
406 404 402 400 398 396 394
O 1s
B-O
C=O
Li2O
545 540 535 530 525
F 1s
B-F
LiF
695 690 685 680

Fig.14

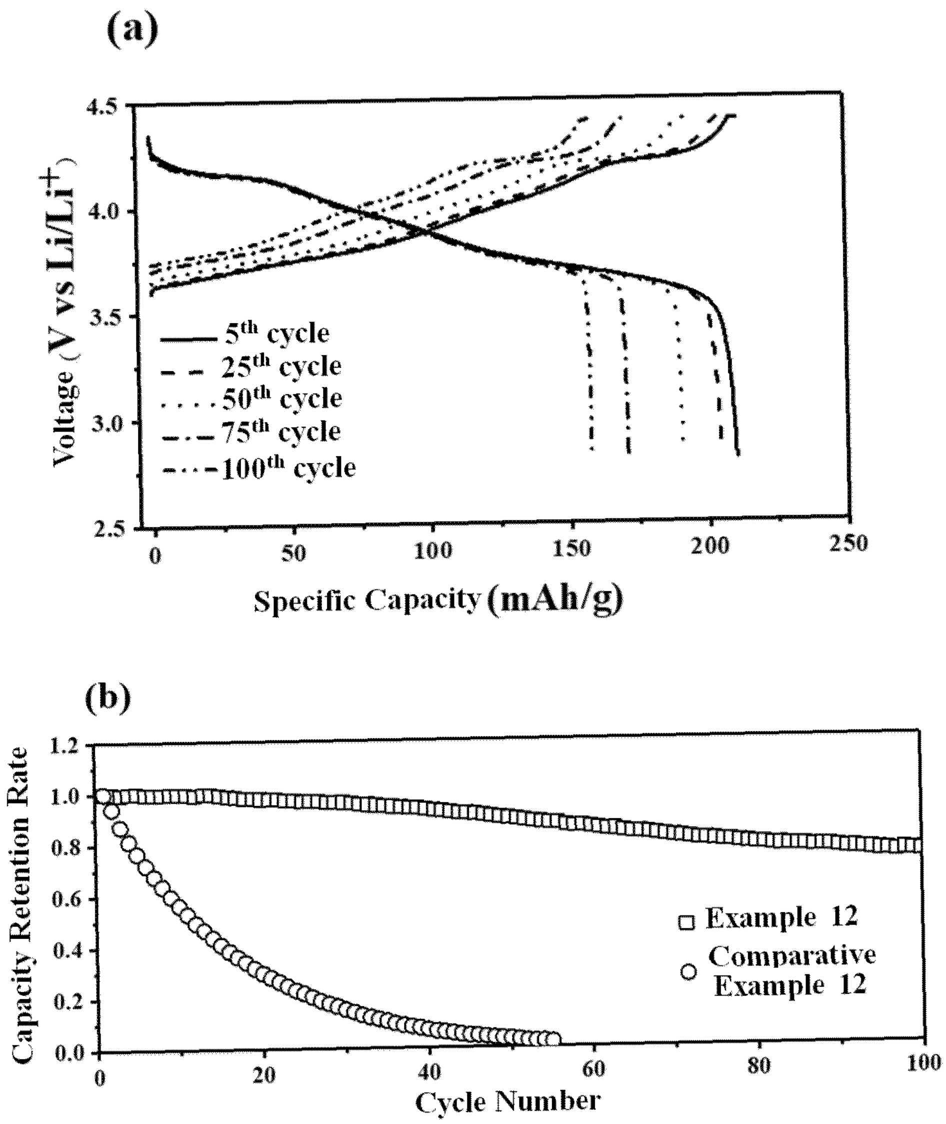
(a)
4.5
4.0
3.5
3.0
2.5
Voltage (V vs Li/Li+)
5th cycle
25th cycle
50th cycle
75th cycle
100th cycle
0
50
100
150
200
250
Specific Capacity (mAh/g)
(b)
1.2
1.0
0.8
0.6
0.4
0.2
0.0
Capacity Retention Rate
Example 12
Comparative Example 12
0
20
40
60
80
100
Cycle Number

Fig.15

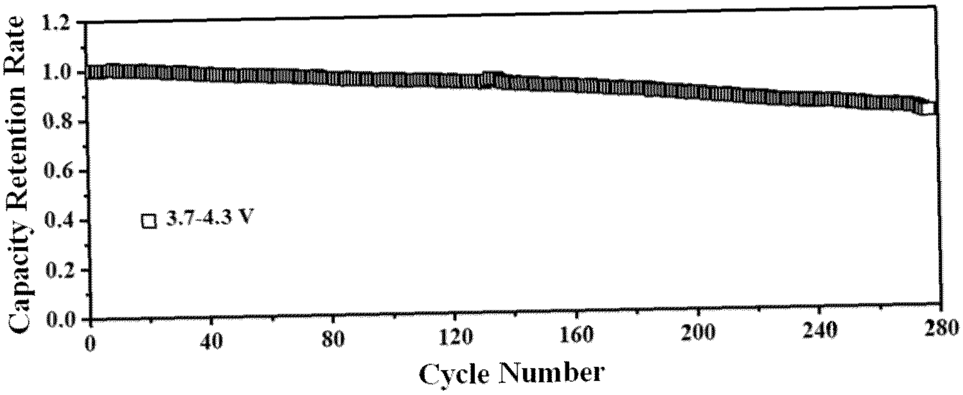
1.2
1.0
0.8
0.6
0.4
0.2
0.0
Capacity Retention Rate
3.7-4.3 V
0
40
80
120
160
200
240
280
Cycle Number

Fig.16

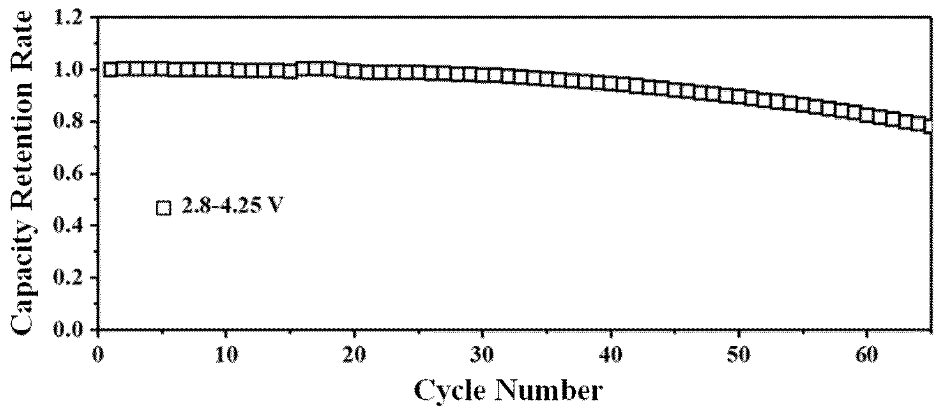


Fig.17

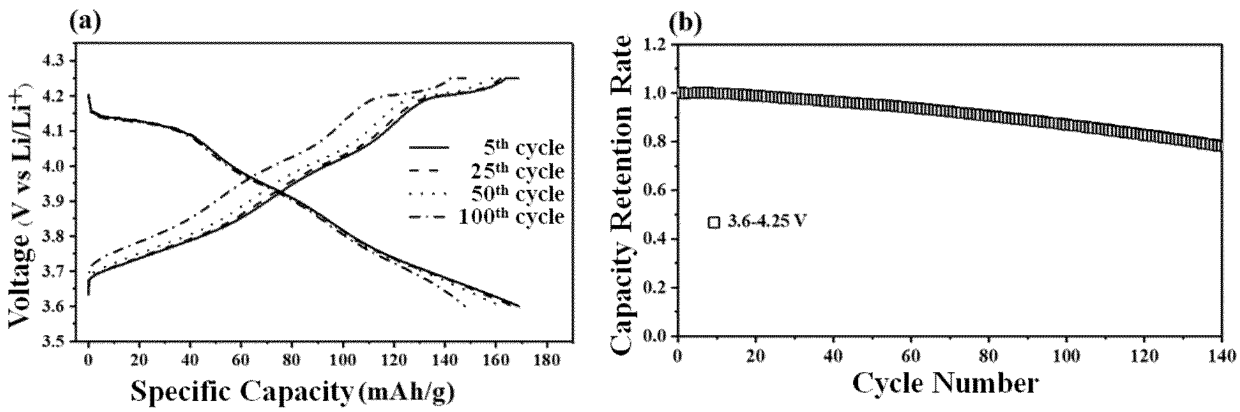


Fig.18

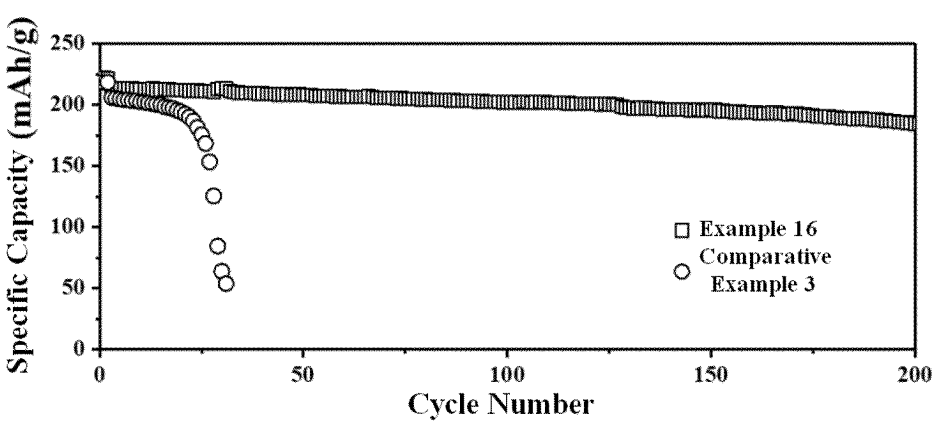


Fig.19

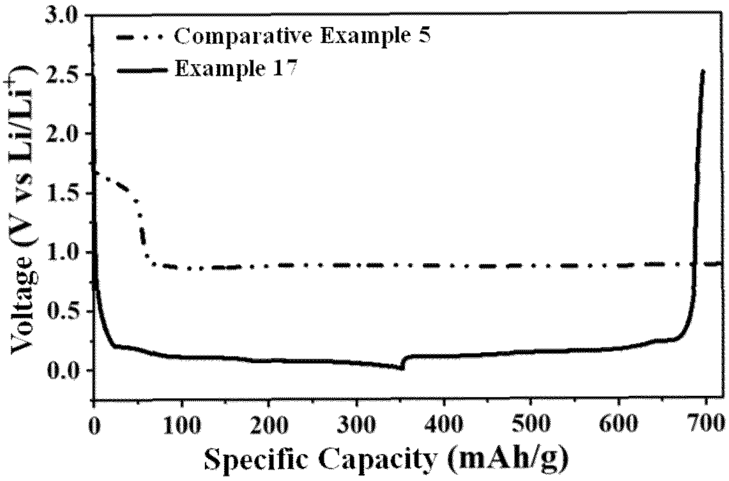
Comparative Example 5
Example 17
Voltage (V vs Li/Li+)
3.0
2.5
2.0
1.5
1.0
0.5
0.0
0
100
200
300
400
500
600
700
Specific Capacity (mAh/g)

Fig.20

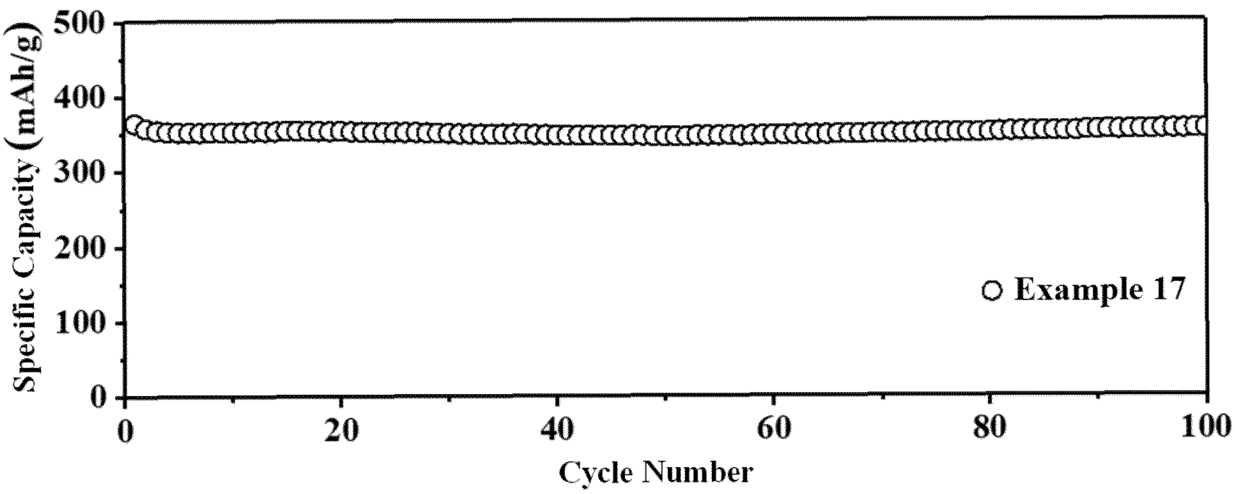
Specific Capacity (mAh/g)
500
400
300
200
100
0
Example 17
0
20
40
60
80
100
Cycle Number

Fig.21

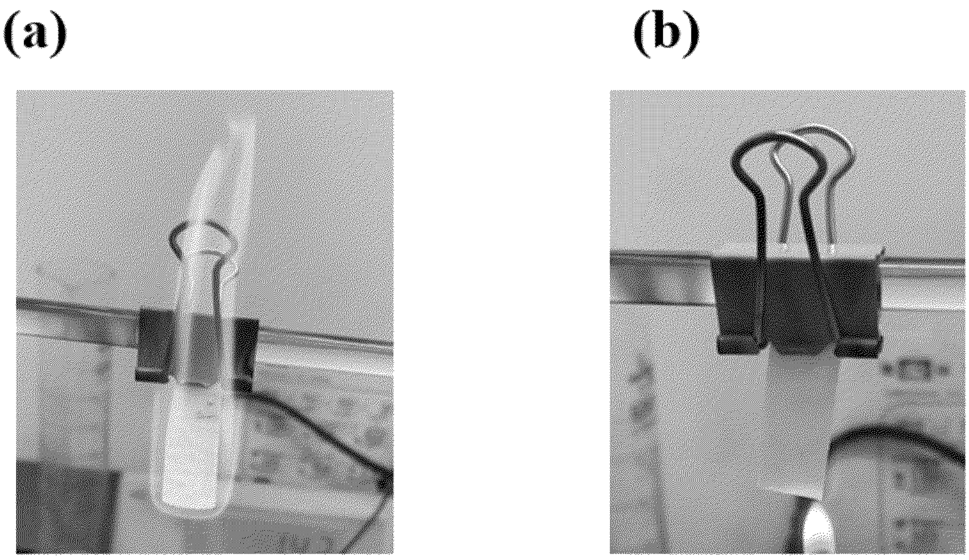
(a)
(b)

Fig.22

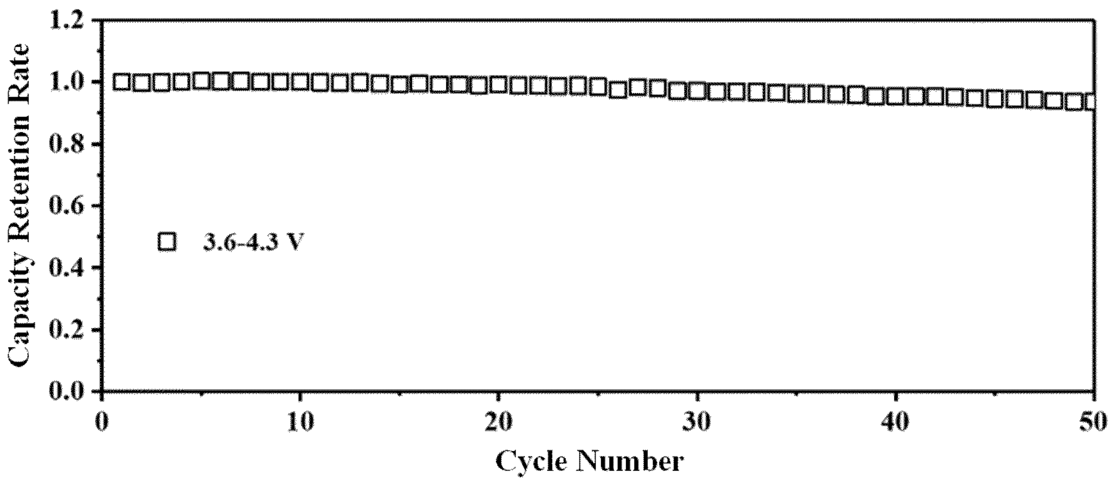
Capacity Retention Rate
1.2
1.0
0.8
0.6
0.4
0.2
0.0
3.6-4.3 V
0
10
20
30
40
50
Cycle Number

Fig.23

## INTERNATIONAL SEARCH REPORT

International application No.
**PCT/CN2022/138887**

**A. CLASSIFICATION OF SUBJECT MATTER**

H01M10/0566(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNTXT, CNKI, VEN: 硼酸锂, 三氟乙酰胺, 电解液, 电解质, libf4, libob, liodfb, electrolyte

**C. DOCUMENTS CONSIDERED TO BE RELEVANT**

| Category* | Citation of document, with indication, where appropriate, of the relevant passages | Relevant to claim No. |
|---|---|---|
| PX | CN 114300744 A (XIAMEN HAICHEN NEW ENERGY TECHNOLOGY CO., LTD.) 08 April 2022 (2022-04-08)<br>description, paragraphs 7-20 | 1-10 |
| X | JP 2006164866 A (SONY CORP.) 22 June 2006 (2006-06-22)<br>description, paragraphs 6-146 | 1-10 |
| X | CN 107069094 A (FUJIAN PROVINCE JIN DE POWER TECHNOLOGY CO., LTD.) 18 August 2017 (2017-08-18)<br>description, paragraphs 5-6 | 1-10 |
| X | CN 109638355 A (HENAN HUARUI ADVANCED MATERIALS CO., LTD.) 16 April 2019 (2019-04-16)<br>description, embodiment 6 | 1-10 |
| A | JP 2019175774 A (DAIKIN INDUSTRIES, LTD.) 10 October 2019 (2019-10-10)<br>entire document | 1-10 |

☐ Further documents are listed in the continuation of Box C.   ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 February 2023** | **06 March 2023** |
| Name and mailing address of the ISA/CN<br>**China National Intellectual Property Administration (ISA/CN)**<br>**China No. 6, Xitucheng Road, Jimenqiao, Haidian District, Beijing 100088**<br>Facsimile No. **(86-10)62019451** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2022/138887**

| Patent document cited in search report | | | Publication date (day/month/year) | Patent family member(s) | Publication date (day/month/year) |
|---|---|---|---|---|---|
| CN | 114300744 | A | 08 April 2022 | None | |
| JP | 2006164866 | A | 22 June 2006 | None | |
| CN | 107069094 | A | 18 August 2017 | None | |
| CN | 109638355 | A | 16 April 2019 | None | |
| JP | 2019175774 | A | 10 October 2019 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YI CUI et al.** *Nat. Energy*, 2020, vol. 5, 526-533
- **JU LI et al.** *Nat. Energy*, 2021, vol. 6, 495-505
- **JUN LIU et al.** *Nat. Energy*, 2021, vol. 6, 723-732
- **J. R. DAHN et al.** *Nat. Energy*, 2020, vol. 5, 693-702